(19)

Europäisches
Patentamt
European
Patent Office
Office européen
des brevets

(11) **EP 2 889 822 A1**

(12) **EUROPEAN PATENT APPLICATION**

(43) Date of publication:
**01.07.2015 Bulletin 2015/27**

(51) Int Cl.:
**G06Q 10/10** *(2012.01)*

(21) Application number: **15150075.8**

(22) Date of filing: **05.01.2015**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **28.12.2013 US 201361964272 P<br>24.03.2014 US 201461967699 P<br>09.04.2014 US 201461995398 P<br>09.04.2014 US 201461995400 P**<br><br>(71) Applicant: **Evolv Inc.<br>San Francisco, CA 94107 (US)** | (72) Inventors:<br>• **Kim, Andrew**<br>  **San Francisco, CA 94107 (US)**<br>• **Housman, Michael G**<br>  **San Francisco, CA 94107 (US)**<br>• **Qamar, Asif**<br>  **San Francisco, CA 94107 (US)**<br><br>(74) Representative: **Harris, Ian Richard<br>D Young & Co LLP<br>120 Holborn<br>London EC1N 2DY (GB)** |

(54) **Employee value-retention risk calculator**

(57)    During an analysis technique, organization data for an organization (such as a company) and/or external data are used to calculate a performance metric and to determine retention risk for an employee. For example, the performance metric may be calculated based on revenue or productivity, and the retention risk may be determined based on an unemployment rate in a region that includes the organization or hiring trends in the region. The calculated performance metric and the determined retention risk are provided to the organization. In addition, a retention suggestion and an associated cost-benefit analysis are provided for the employee. This information may allow the organization to manage its employees, and to effectively apply limited resources to reduce retention expense and while increasing the likelihood of retaining employees.

FIG. 23

## Description

### CROSS-REFERENCE TO RELATED APPLICATIONS

This application claims the benefit of U.S. Provisional Application No. 61/964,272, filed December 28, 2013, U.S. Provisional Application No. 61/967,699, filed March 24, 2014, U.S. Provisional Application No. 61/995,398, filed April 9, 2014, and U.S. Provisional Application No. 61/995,400, filed April 9, 2014, each of which is entirely incorporated herein by reference.

### BACKGROUND

Retaining talented employees is increasingly important for business success. While businesses have previously relied on loyalty to reduce attrition, this approach is typically inadequate in a competitive and dynamic marketplace. Additionally, the costs of recruiting and training new employees to replace employees who leave a company have a significant financial impact on a business. Time that may be spent working efficiently on projects is instead spent training new employees.

A variety of incentives can be used in an attempt to retain employees. For example, employees can be given bonuses or pay raises. However, giving all employees such an incentive is expensive and may not be possible given limited resources. In addition, changes in salary may not accomplish the desired goal of retaining the employees. In particular, financial reward is but one component of employee compensation and, depending on the employee, other factors may be more important. Thus, once a minimum acceptable salary is obtained, further increases in salary may have diminished returns as a retention incentive. Furthermore, different employees may be motivated by different types of incentives, such as recognition or a feeling of accomplishment.

The large amount of information and factors associated with employee compensation and retention makes retention decisions difficult to analyze. Consequently, it can be difficult for an organization to make business decisions as to how to allocate limited resources on an individual-specific basis to retain employees. In the absence of such employee-retention techniques, the organization may inadvertently lose talented employees, with a commensurate negative impact on profits and morale.

### SUMMARY

Employee retention is a difficult problem facing a myriad of businesses, especially as the marketplace for employees has become increasingly dynamic. Expanded opportunities allow employees to search for compensation that is keyed to the particular interests of the employee. However, the ability of companies to determine and integrate new components of employee valuation and compensation has not kept pace with the expanded opportunities available to employees.

The present disclosure generally relates to computer-based techniques for analyzing multiple components associated with employee value and retention risk. The present disclosure provides computer-based techniques that can be effectively applied to the problem of evaluating, compensating, and retaining employees of a business. Such techniques can enable employers to derive workplace metrics in a manner that cannot be achieved by individuals alone. Some embodiments of the present disclosure relate to a computer-based technique for analyzing employee value and retention risk, and providing a retention suggestion and an associated cost-benefit analysis for an employee.

The disclosed embodiments relate to a computer system that analyzes employee value and retention risk. During operation, the computer system accesses, at a memory location, organization data for an organization. Then, the computer system calculates a performance metric for an employee based on the organization data. Moreover, the computer system determines retention risk for the employee based on the organization data. Next, the computer system provides the calculated performance metric and the determined retention risk. Furthermore, the computer system provides a retention suggestion and an associated cost-benefit analysis for the employee, where the cost-benefit analysis includes an expense associated with the retention suggestion and an estimated incremental retention time in response to the retention suggestion.

Note that the organization data may include: tenure of the employee at the organization, compensation of the employee, satisfaction scores associated with the employee, skills of the employee, a supervisor of the employee, a colleague of the employee, interaction among employees of the organization, and/or operations information of the organization. Additionally, the performance metric may include: revenue associated with the employee, productivity of the employee, overtime worked by the employee, adherence of the employee to a schedule, attendance of the employee, a number of employees that interact with the employee, activity of the employee, and/or satisfaction scores associated with the employee.

In some embodiments, calculating the performance metric and/or determining the retention risk involves variance decomposition to select factors in the organization data, determine their impact, and to order or cluster the factors in regression models. Accordingly, the present disclosure includes computer-based techniques for analyzing employee retention probabilities. Some embodiments of the present disclosure relate to a computer-based technique for analyzing employee retention probabilities by performing clustering analysis.

Moreover, the calculating and determining operations may be repeated for multiple employees in the organization, and the calculated performance metrics and the determined retention risks for subsets of the employees are aggregated and provided. The aggregated employees may correspond to: a group in the organization, a supervisor, a location, employees having an attribute, a time interval, and/or employees associated with a customer account.

In some embodiments, the computer system accesses, at another memory location, external data for at least one other organization, and the determining of the retention risk is based on the external data. For example, the external data may include: an unemployment rate in a region that includes the organization, hiring trends in the region, retention of employees by competitors of the organization, proximity of the competitors of the organization, compensation offered by the competitors, and/or activity of the employee on a social network.

Furthermore, the calculated performance metric and the determined retention risk may be evaluated for a set of time intervals, and the calculated performance metric and the determined retention risk may correspond to variation in the set of time intervals. Alternatively or additionally, the calculated performance metric may be relative to a mean performance metric of multiple employees of the organization.

Another embodiment provides a method that includes at least some of the operations performed by the computer system. Another embodiment provides a computer-program product for use with the computer system. This computer-program product includes instructions for at least some of the operations performed by the computer system. Another embodiment provides a user interface for use with the computer system. This user interface provides the calculated performance metric, the determined retention risk, the retention suggestion and/or the associated cost-benefit analysis.

Additionally, the present disclosure includes computer-based techniques for modifying assessment techniques. Some embodiments of the present disclosure relate to a computer-based technique for modifying an assessment technique based on analysis of organization data using a panel method.

The present disclosure also includes computer-based techniques for performing calculations. Some embodiments of the present disclosure relate to a computer-based technique for performing calculations efficiently using a parallel-processing architecture.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

**INCORPORATION BY REFERENCE**

All publications, patents, and patent applications mentioned in this specification are herein incorporated by reference to the same extent as if each individual publication, patent, or patent application was specifically and individually indicated to be incorporated by reference.

**BRIEF DESCRIPTION OF THE DRAWINGS**

The novel features of the disclosure are set forth with particularity in the appended claims. A better understanding of the features and advantages of the present disclosure will be obtained by reference to the following detailed description that sets forth illustrative embodiments, in which the principles of the disclosure are utilized, and the accompanying drawings (also "figure" and "FIG." herein), of which:

FIG. 1 is a flow chart illustrating a method for analyzing employee value and retention risk in accordance with an embodiment of the present disclosure;

FIG. 2 is a flow chart illustrating the method of FIG. 1 in accordance with an embodiment of the present disclosure;

FIG. 3 is a drawing of a user interface that provides information specifying employee value and retention risk in accordance with an embodiment of the present disclosure;

FIG. 4 is a drawing of a user interface that provides information specifying employee value and retention risk in accordance with an embodiment of the present disclosure;

FIG. 5 is a drawing of a user interface that provides information specifying employee value and retention risk in accordance with an embodiment of the present disclosure;

FIG. 6 is a drawing of a user interface that provides information specifying employee value and retention risk in accordance with an embodiment of the present disclosure;

FIG. 7 is a block diagram illustrating a system that performs the method of FIGs. 1, 2, 10, 11, 15, 16, 20 and 21 in accordance with an embodiment of the present disclosure;

FIG. 8 is a block diagram illustrating a computer system that performs the method of FIG. 1 and 2 in accordance with an embodiment of the present disclosure;

FIG. 9 is a block diagram illustrating a data structure that includes employee-value and retention-risk data in accordance with an embodiment of the present disclosure;

FIG. 10 is a flow chart illustrating a method for identifying predictors for retention in accordance with an embodiment of the present disclosure;

FIG. 11 is a flow chart illustrating the method of FIG.

10 in accordance with an embodiment of the present disclosure;

FIG. 12 is a drawing of a user interface that provides information associated with retention in accordance with an embodiment of the present disclosure;

FIG. 13 is a block diagram illustrating a computer system that performs the method of FIG. 10 and 11 in accordance with an embodiment of the present disclosure;

FIG. 14 is a block diagram illustrating a data structure that includes retention data in accordance with an embodiment of the present disclosure;

FIG. 15 is a flow chart illustrating a method for modifying an assessment in accordance with an embodiment of the present disclosure;

FIG. 16 is a flow chart illustrating the method of FIG. 15 in accordance with an embodiment of the present disclosure;

FIG. 17 is a drawing of a user interface that provides information associated with an assessment technique in accordance with an embodiment of the present disclosure;

FIG. 18 is a block diagram illustrating a computer system that performs the method of FIG. 15 and 16 in accordance with an embodiment of the present disclosure;

FIG. 19 is a block diagram illustrating a data structure that includes assessment data in accordance with an embodiment of the present disclosure;

FIG. 20 is a flow chart illustrating a method for performing calculations in accordance with an embodiment of the present disclosure;

FIG. 21 is a flow chart illustrating the method of FIG. 20 in accordance with an embodiment of the present disclosure;

FIG. 22 is a block diagram illustrating a framework that performs the methods of FIGs. 20 and 21 in accordance with an embodiment of the present disclosure;

FIG. 23 is a block diagram illustrating a computer system that performs the method of FIG. 20 and 21 in accordance with an embodiment of the present disclosure; and

FIG. 24 is a block diagram illustrating a data structure that includes retention data in accordance with an embodiment of the present disclosure.

Note that like reference numerals refer to corresponding parts throughout the drawings. Moreover, multiple instances of the same part are designated by a common prefix separated from an instance number by **a** dash.

## DETAILED DESCRIPTION

While various embodiments of the disclosure have been shown and described herein, it will be obvious to those skilled in the art that such embodiments are provided by way of example only. Numerous variations, changes, and substitutions may occur to those skilled in the art without departing from the disclosure. It should be understood that various alternatives to the embodiments of the disclosure described herein may be employed.

Embodiments of a computer system, a technique for analyzing employee value and retention risk, and a computer-program product (e.g., software) for use with the computer system are described. During this analysis technique, organization data for an organization (such as a company) and/or external data are used to calculate a performance metric and to determine retention risk for an employee. For example, the performance metric may be calculated based on revenue or productivity, and the retention risk may be determined based on an unemployment rate in a region that includes the organization or hiring trends in the region. The calculated performance metric and the determined retention risk are provided to the organization. In addition, a retention suggestion and an associated cost-benefit analysis are provided for the employee.

Thus, by calculating the employee value and retention risk, the analysis technique may allow the organization to make better business decisions. For example, the organization may be able to dynamically identify a valuable employee who is at risk of leaving so that corrective action can be taken. Moreover, the analysis technique may assist the organization in determining how to use limited resources to retain the employee and/or whether it is cost-effective to try to retain the employee. In these ways, the analysis technique may assist the organization in managing its employees. Consequently, the analysis technique may facilitate business success of the organization and, thus, commercial activity.

Note that the analysis technique is not an abstract idea. In particular, the quantitative analysis included in the analysis technique is not: a fundamental economic principle, a human activity (the calculations involved in the operations in the analysis technique significantly exceed those of a human because of the very large number of parameters or factors considered), and/or a mathematical relationship/formula. Moreover, the analysis technique amounts to significantly more than an alleged abstract idea. In particular, the analysis technique improves the functioning of a computer or the computer system that executes software and/or implements the analysis technique. For example, the analysis technique: speeds up computation of the performance metric, the retention risk, the retention suggestions and the cost-benefit analysis; reduces memory consumption when performing the computations; improves reliability of the computations (as evidenced by improved retention); reduces network latency; improves the user-friendliness of a user interface that displays results of the computations; and/or improves other performance metrics related to the function of the computer or the computer system.

In the discussion that follows, an employee may include: an individual or a person. Furthermore, an 'organization' should be understood to include: businesses, for-profit corporations, non-profit corporations, groups of individuals, sole proprietorships, government agencies, partnerships, etc.

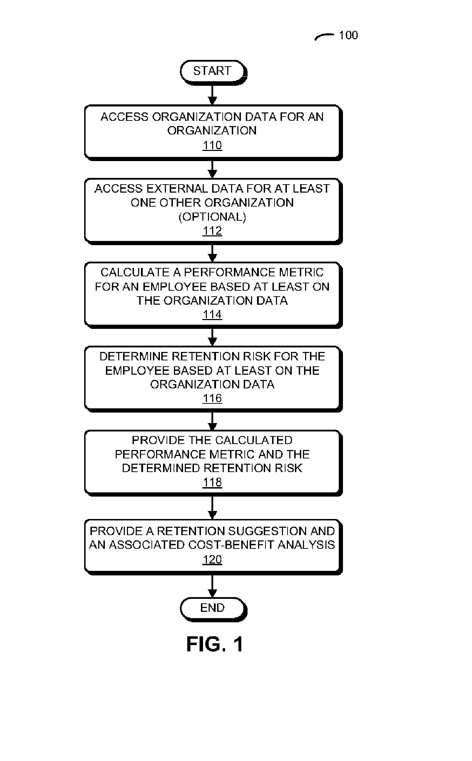

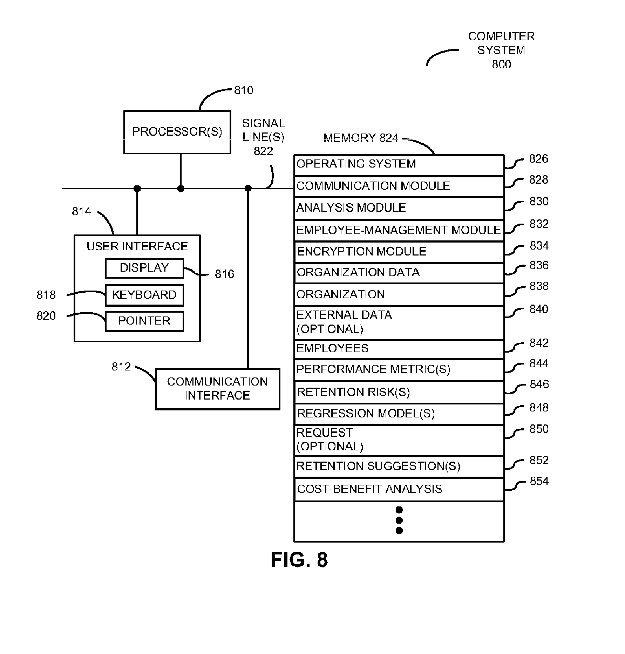

We now describe embodiments of the analysis technique. FIG. 1 presents a flow chart illustrating a method 100 for analyzing employee value and retention risk, which may be performed by a computer system (such as computer system 800 in FIG. 8). During operation, the computer system accesses, at a memory location, organization data for an organization (operation 110). For example, the computer system may access the organization data of a company via a data portal using a network (such as the Internet). Note that the organization data may include human-resources data and/or operations data. In particular, the organization data may include: tenure of the employee at the organization (such as the hire date), attendance of the employee (such as how often the employee is sick or late for work), compensation of the employee, satisfaction scores associated with the employee (such as rankings provided by a customer, a manager or other employees, a trainer or coach, etc.), skills of the employee, a supervisor of the employee, a colleague of the employee, interaction among employees of the organization (such as email, telephone calls or text messages among the employees), metadata about the employee (such as educational or work experience attributes), and/or operations information of the organization (such as products or services that are fabricated or sold as a function of time).

Then, the computer system calculates a performance metric for an employee based at least on the organization data (operation 114). Additionally, the computer system may store the calculated performance metric. Note that the performance metric may include: revenue associated with the employee, productivity of the employee, overtime worked by the employee, adherence of the employee to a schedule, attendance of the employee, a number of employees that interact with the employee, activity of the employee (such as words typed per minute or keystrokes on user interface), and/or satisfaction scores associated with the employee (rankings provided by a customer, a manager or other employees, a trainer or coach, etc.). For example, the performance metric may assess the influence of the employee in at least a subset of the organization based on the number of times the employee is included in the address list of emails or text messages, or the number of times other employees call the employee. In particular, the performance metric may use a social graph to map the interactions among employees of the organization, and central nodes (with lots of edges may have higher performance metrics than other nodes).

Alternatively or additionally, the performance metric may assess the impact of the employee on revenue or profit of the organization. For example, the calculated performance metric may be relative to a mean performance metric of multiple employees of the organization. In some embodiments, productivity of multiple employees is fit to a function (such as Gaussian), and the performance metric may have values representing different portions of the distribution (such as a highest value for the top 5 or 10% of the employees).

Moreover, the computer system determines retention risk for the employee based at least on the organization data (operation 116). The computer system may store the determined retention risk. In some embodiments, the computer system optionally accesses, at another memory location, external data for at least one other organization (operation 112), and the determining of the retention risk is based on the external data. For example, the external data may include: an unemployment rate in a region that includes the organization (such as a city or a state), hiring trends in the region (such as a number of job postings or hiring by one or more competitors of the organization), retention of employees by competitors of the organization, proximity of the competitors of the organization (such as the opening nearby of a new factory), compensation offered by the competitors, and/or activity of the employee on a social network (such as posting by the employee on an employment forum or updates to the employee's profile on an employment-related social network).

As described further below, the calculated performance metric and/or the determined retention risk may be evaluated for a set of time intervals, and the calculated performance metric and/or the determined retention risk may correspond to variation during the set of time intervals (such as a second derivative as a function of time, which may indicate volatility and, thus, may be predictive for change). For example, the retention risk may be the second derivative as a function of time of hiring by competitors of the organization of one or more individuals who have similar education or work experience as the employee (as indicated by attributes or metadata associated with the employee in the organization data) during the set of time intervals (which each may have a duration of one day or a week). Peaks in the retention risk exceeding a threshold (such as 2-3x of the long-term average retention-risk value) may indicate that the employee's employment state is likely to change *(i.e.,* that they are at risk of leaving the organization).

In some embodiments, calculating the performance metric (operation 114) and/or determining the retention risk (operation 116) involves variance decomposition (into a portion of the variance associated with known sources and another portion of the variance associated with unknown sources) to select factors in the organization data, determine their impact, and to order or cluster the factors in regression models. For example, variance decomposition may perform regression to assess the importance and to order the factors in a polynomial, which may be a linear combination of the factors raised to associated exponents $n$ and multiplied by associated amplitude weights $w_i$ (however, a wide variety of linear and nonlinear functions may be used). In particular, using the entropy, a set of factors may be identified in the organization data and/or the optional external data. Then, a series of regression models may be built and evaluated using a training subset of the organization data and/or the optional external data. In these regression models, factors may be removed one at a time, and the remaining factors may be reordered. These permutations and combinations on subsets of the set of factors may provide a table of predictions for the different regression models (*i.e.,* statistical comparison between predictions of the regression models for a test subset of the organization data and/or optional external data relative to the training subset). The average model performance for the factors, the cross-correlations among the factors and/or the ordering of the factors in these predictions may be used to select the polynomial (factors, exponents $n$ and amplitude weights $w_j$) using to calculate the performance metric and/or to determine the retention risk. Thus, variance decomposition may allow the number of factors in the organization data and/or the optional external data to be pruned to reduce the risk of over fitting.

While the preceding discussion illustrated the use of variance decomposition, more generally a feature selection or a feature extraction technique (including a more general version of variance decomposition) may be used in operations 114 and/or 116 to assess the impact of different features on the overall quality of a predictive model, thereby allowing a subset of the features (or possible predictors) to be used in a predictive model. Thus, the specific embodiment of variance decomposition is used for purposes of illustration only, and one or more other feature selection or feature extraction techniques may be used. However, the use of such feature selection or feature extraction techniques in method 100 is optional.

Moreover, the calculating and determining operations (operations 114 and 116) may be repeated for multiple employees in the organization, and the calculated performance metrics and the determined retention risks for subsets of the employees may be aggregated and provided. The aggregated employees may correspond to: a group in the organization (such as a department), a supervisor of the employees, a location, employees having an attribute (such as a job title, an educational background or skill set), a time interval (such as one week, a month, six months, a year, etc.), and/or employees associated with a customer account (such as a particular client). This aggregation operation may reduce noise in the results, and may allow the analysis technique to provide actionable feedback on trends in different subsets of the organization (such as different groups or employees that work for the same manager or supervisor).

Next, the computer system provides the calculated performance metric and the determined retention risk (operation 118). For example, the computer system may provide the calculated performance metric and the determined retention risk to a manager or a supervisor of the employee in the organization. Alternatively or additionally, the computer system may provide the calculated performance metric and the determined retention risk to a representative of human resources for the organization.

Furthermore, the computer system provides a retention suggestion and an associated cost-benefit analysis for the employee (operation 120), where the cost-benefit analysis includes an expense associated with the retention suggestion and an estimated incremental retention time in response to the retention suggestion. For example, the retention suggestion may be to offer additional training opportunities to the employee to help them improve their skills. Thus retention suggestion may cost $20,000, but may be predicted to keep the employee from leaving for several months, which may more than offset the incremental expense (thereby justifying the use of the retention suggestion). More generally, the retention suggestion may include an action that may keep the employee from leaving (such as: a one-time bonus, a pay increase, a promotion, a change in title, a change in work responsibility, additional training, changing the employee's supervisor, recognition among other employees, etc.). The retention suggestion and/or the cost-benefit analysis may be provided to the manager or the supervisor of the employee in the organization, and/or to the representative of human resources for the organization.

The combination of the calculated performance metric, the determined retention risk, the retention suggestion and/or the cost-benefit analysis may provide the manager or the representative information with which to make informed decisions about managing the employees of the organization, thereby allowing the organization to reduce attrition and the associated retention cost. In particular, method 100 may be used to identify, on an individual-specific basis, who are the flight risks from an organization and how best to intervene to prevent the loss of valuable employees. (However, the aggregate impact on more than one employee may be used as feedback to revise or improve the recommendations. Thus, the computer system may track the impact of previous recommendations for other employees, and this information may be used as feedback to improve subsequent recommendation(s) for one or more other employees.) This capability may allow the organization to retain key personnel (*e.g.*, employees with large values of the performance metric), which may facilitate continued success of the organization. For example, the organization may use the information provided by the analysis technique to guide: training of the employee, termination of the employee (or other employees), improved matching of the employee and their supervisor, retention efforts, etc. Alternatively or additionally, there may be a trend in which a particular supervisor is effective (in terms of productivity), but has high attrition with new employees. In this case, the analysis technique may provide a recommendation (the retention suggestion) that the employee (who may be a new employee) be assigned to a different supervisor or manager.

Note that the analysis technique may be implemented by a third party (such as a separate company) that provides a service to the organization. Alternatively, the organization may use the analysis technique to manage its own employees. In some embodiments, the analysis technique is included as a service that compliments recruiting efforts, so that a new hire does not leave the organization. In these embodiments, the analysis technique may be viewed as a form of insurance for the recruiter and/or the organization.

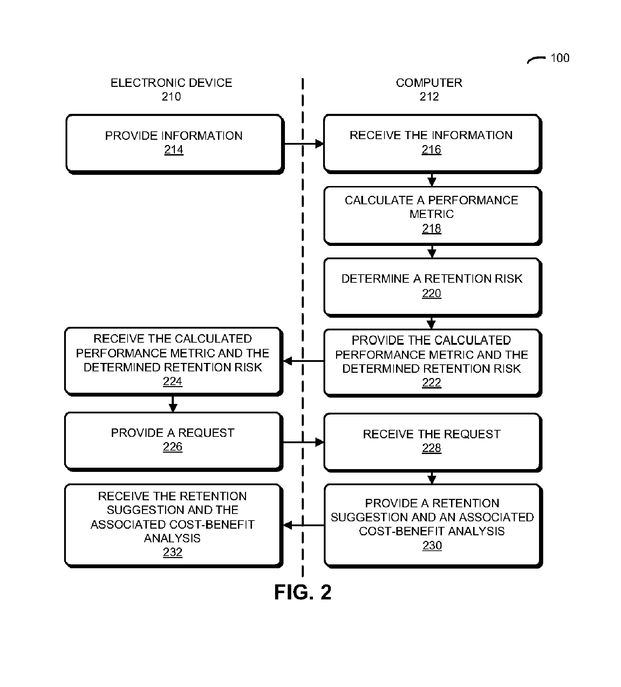

In an exemplary embodiment, the analysis technique is implemented using one or more electronic devices (such as a computer, a server or a computer system) and one or more computers (such as a server or a computer system), which communicate through a network, such as a cellular-telephone network and/or the Internet. This is illustrated in FIG. 2, which presents a flow chart illustrating method 100 (FIG. 1).

During the method, electronic device 210 may provide (operation 214) and computer 212 may receive (operation 216) information, such as the organization data for the organization and/or the optional external data.

Then, computer 212 may calculate the performance metric (operation 218) for the employee. Moreover, computer 212 may determine the retention risk (operation 220) for the employee. Operations 218 and 220 may be repeated multiple times to determine one or more regression models. Additionally, the calculated performance metric and the determined retention risk may be stored at computer 212.

Next, computer 212 may provide (operation 222) and electronic device 210 may receive (operation 224) the calculated performance metric and the determined retention risk. Furthermore, a user of electronic device 210 may provide (operation 226) and computer 212 (operation 228) may receive a request. In response, computer 212 may provide (operation 230) and electronic device 210 may receive (operation 232) the retention suggestion and the associated cost-benefit analysis for the employee.

In some embodiments of method 100 (FIGs. 1 and 2), there are additional or fewer operations. Moreover, the order of the operations may be changed, and/or two or more operations may be combined into a single operation.

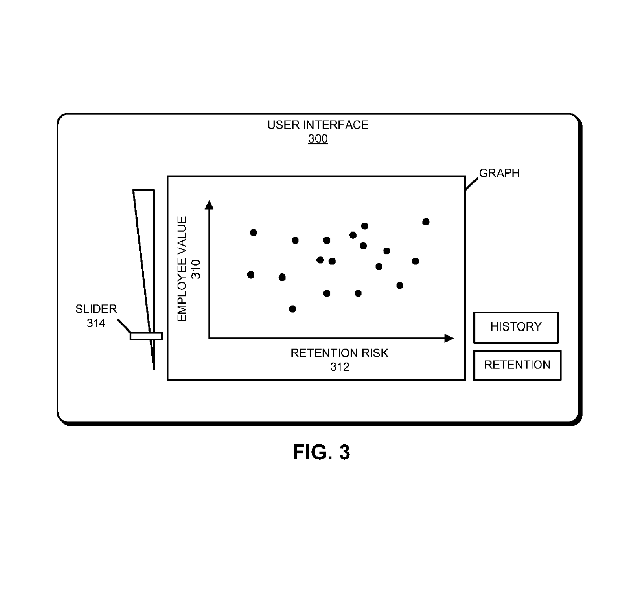

As described previously, in an exemplary embodiment the analysis technique may allow the value of an employee's contribution to a company and their flight or retention risk to be used by companies that are seeking to maintain and maximize their human capital (post hiring) while reducing their operational expenses (*i.e.,* for competitive advantage). As described further below with reference to FIGs. 3-6, the results of the analysis technique may be used to place employees along a graphical 'heat map' in which their contribution (or performance metrics) is on one axis and their retention risk is along the other, thereby illustrating the tradeoff between these parameters. In this way, the assessed employee contributions and employee retention risks are graphically displayed to illustrate retention suggestions that employers can then use to easily and quickly assess the state of their workforce, and intervene when high-value employees are at a high flight-risk.

In general, employers face problems with not only employee retention, but in retaining the talent that drives the most value to their companies. It would be advantageous if an employer could focus their efforts on the retention of high-value talent after these employees are hired. In the analysis technique, this is facilitated by calculating the value of an employee (the performance metric) and their flight risk (the retention risk).

The value of an employee may have an intangible and tangible element. For example, an employee's contribution to the workplace or the work environment can be difficult to quantify. It is often assessed intuitively, such as by human resources managers. However, while it may be possible to monitor the interactions among employees via email, text and/or telephone communication, as well as based on the proximity of the employees to each other (*e.g.,* an application installed on the employee's cellular telephones may track how close the employees are to each other, and how often this occurs), it is difficult, if not impossible, to sort through this large amount of data, much less to assess its value as a human resources manager. The tangible value of an employee may be calculated based on performance indicators, such as: tenure and consistency. However, sorting through this large amount of data may provide intuitive information that would be difficult to discern by casual observance.

Further, the flight risk of an employee may be more difficult to determine because employee dissatisfaction may not be outwardly visible during direct interaction with the employee. While previous technologies may rely on the observance of employees and the intuition of human resource managers, these methods may not be able to assess important factors related to employee retention. In some cases, the flight risk may be embedded in their performance data. For example, sudden changes (downward or upward) may indicate that the employee is either dissatisfied or is trying to impress a new employer. Similarly, economic data (such as the optional external data) may indicate the state of the market for the employee, and thus may indicate how tempting or numerous are any competing offers (or prospective offers) for the employee.

By providing methods that allow these multiple factors to be analyzed and assessed in view of employee retention, the present disclosure provides a technical solution to the difficulty of identifying, assessing, and compensating employee value. Using methods disclosed herein, seemingly disparate characteristics associated with employee retention may be quantified and interrelated so as to provide aggregated assessments related to employee assessment.

As shown in FIG. 3, which presents a drawing of a user interface 300, employee value 310 and retention risk 312 may be displayed graphically for one or more employees to user of the human-resources software, such as a manager at the organization or a representative of human resources. This may allow the relative value and retention risk for a given employee to be assessed.

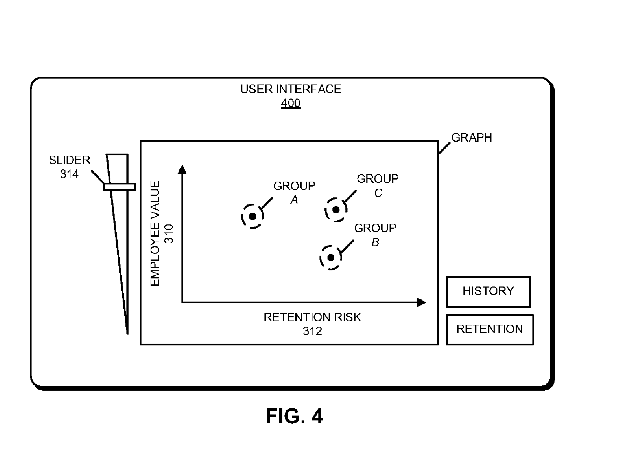

By activating an icon, such as by clicking on or touching a slider, the user may change the scale in the organization that is presented. For example, by moving slider 314, the user may view the aggregate value and retention risk for employees in different groups or departments in the organization. Alternatively, the user may view the aggregate value and retention risk for the employees of different managers. This is shown in FIG. 4, which presents a drawing of a user interface 400. Note that data points in user interface 300 (FIG. 3) may be color coded to indicate associations of particular employees with different groups in the organization and/or with different managers.

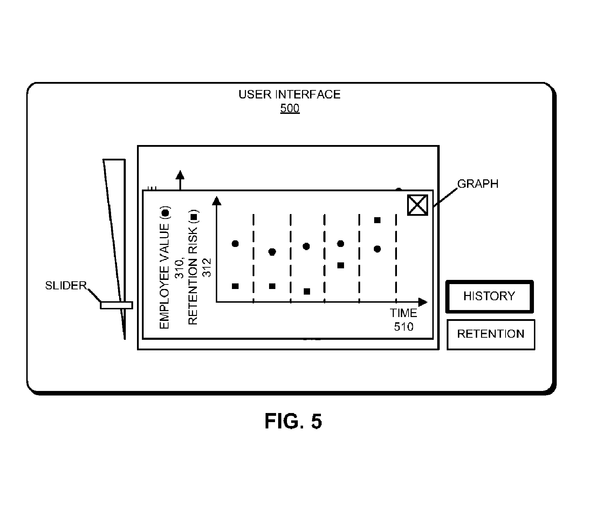

In addition, by right-clicking on or touching a data point in user interface 300 (FIG. 3) (or by selecting the data point for an employee and activating a 'history' icon), a menu may be displayed. Selecting a 'history' option may result in the display of a graph of employee value 310 and retention risk 312 as a function of time 510 (FIG. 5) for an employee. This is shown in FIG. 5, which presents a drawing of a user interface 500. This user interface may allow the user to visually assess trends for the employee.

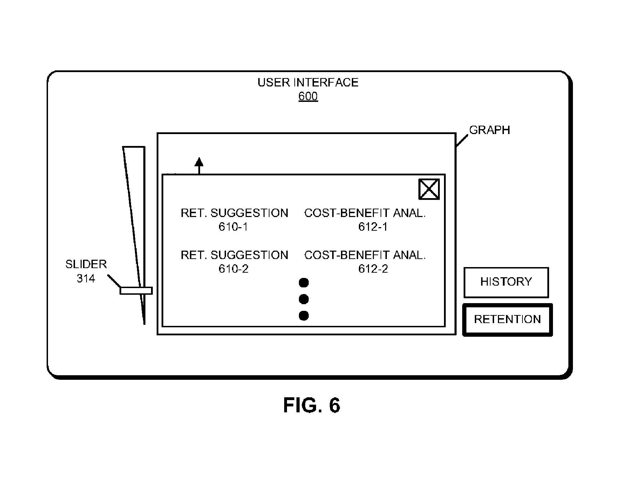

Alternatively, by right-clicking on or touching a data point in user interface 300 (FIG. 3) (or by selecting the data point for an employee and activating a 'retention' icon), and then selecting a 'retention' option, may result in the display of one or more retention suggestions 610 (FIG. 6) and an associated cost-benefit analysis 612 (FIG. 6) for the employee. This is shown in FIG. 6, which presents a drawing of a user interface 600. Note that the one or more retention suggestions 610 may be ordered or ranked. This information may present options for the user to use in retaining the employee. In addition, the displayed cost-benefit analysis 612 may allow the user to determine whether a particular retention suggestion is worthwhile or pays for itself. User interface 600 may include intuitive information to assist the user in this regard. For example, retention suggestions that are likely to be worthwhile (either financially or per predefined user criteria) may have a different color than those that are marginal or unlikely to be worthwhile.

Using the information provided by the analysis technique, the user may be able to identify, with high accuracy, the employees that are at risk of terminating or self-selecting out. This feedback can be weighed against the employees' contribution value to the organization. Collectively, this information may allow employers to make informed and intelligent decisions the employee quits or leaves the organization.

In an exemplary embodiment, the analysis technique generates and maintains an econometric regression model. This regression model uses consistent and high-velocity data streams that are repeatedly updated to conduct analyses and to maintain calibration. For example, the regression model may be updated in near real-time (such as hourly, daily or weekly). The datastream and machine-learning components used by the analysis technique to create a scalable and robust solution.

During the analysis technique, employee value (such as productivity in answering customer telephone calls or in fabricating a product) may be calculated using deviations of performance of a single employee from the population averages for the organization. A Gaussian distribution may be used. The employees that are considered to be medium-value performers would cluster at the average value of the distribution, and high- and low-value performing employees would be in the tails of the distribution.

Employee flight risk may be determined using multiple levels of regression models. The explanatory variables in the regression models that predict the likelihood of exit may be calculated using performance data feeds (e.g., from the organization data) and the volatility of their daily performance. Moreover, the volatility may use predetermined bounds of inherent volatility (such as 2-3x a long-term average value). Alternatively or additionally, the first and second-order derivative as a function of time of their daily performance may be calculated and the slope and direction may be used as predictors.

As shown in FIGs. 3-6, the calculated employee value and flight risk may then be combined and displayed as a scatterplot so that employers can identify high-flight-risk and high-value employees. This graph may also provide a dynamic and a real-time view of the state of the employer's workforce, as well as trends among their employees.

For example, company *ABC* may provide the organization data to a provider of the analysis technique, including: employee-level work location, job title, overtime hours, and the employee's supervisor. In addition, the provider may receive daily customer-satisfaction scores for the employees and the number of sales conversions. This data may be combined (hourly or daily) with existing organization data, and with regional monthly unemployment levels and weekly gas prices (the optional external data).

During the analysis technique, variance decomposition may determine that gas price is non-predictive, so this factor may not be used in subsequent predictive analysis. However, the square of overtime may have been identified as predictive, and this factor may have been included in the regression model.

Using the regression model (which may be used for one employee or multiple employees), and the aforementioned factors in the organization data and the optional external data, the performance metric and retention risk of employee Bob Smith at the company may be determined. The results may indicate that Bob's customer satisfaction performance during the last week has been extremely (relative to his historic baseline) varied, and that his overtime has reduced. This may indicate an 82% increased likelihood that Bob may leave the company within a week.

However, Bob may be a high performing employee. In particular, company *ABC* may consider employees that produce more widgets per hour valuable. Based on his average productivity in this regard (holding constant factors such as work location or job type), Bob may be in the top 5% of employees. Consequently, a retention suggestion may be provided. This retention suggestion may indicate that by giving Bob a financial award as an 'outstanding performer' is likely to ensure that he stays at the company for at least six months, and that the incremental cost is more than offset by his high productivity.

Note that the variance decomposition may involve Shapley and Owen values. In particular, the marginal contributions of the variables to the goodness of fit of regression models with different variables and variable orders in subgroups or partitions of the variables may be calculated. Then, the average marginal contributions for the variables may be computed, thereby specifying their relative importance or contributions. This information may be used to prune the number of variables and/or to select the variable order in the regression models.

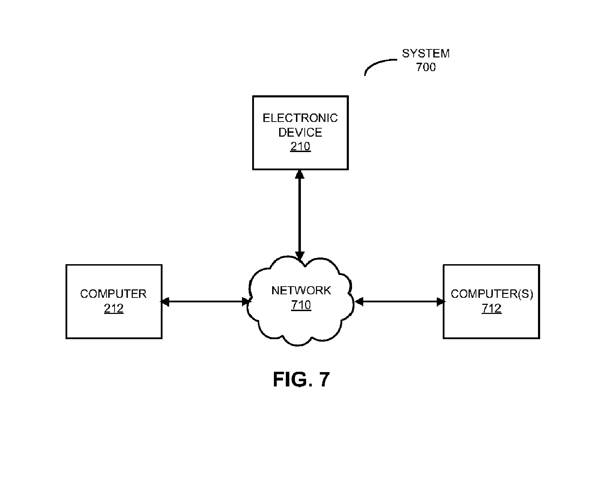

We now describe embodiments of a system and the computer system, and their use. FIG. 7 presents a block diagram illustrating a system 700 that can be used, at least in part, to perform operations in method 100 (FIGs. 1 and 2). In this system, during the analysis technique a user of electronic device 210 may use a software product, such as a software application that is resident on and that executes on electronic device 210. (Alternatively, the user may interact with a web page that is provided by computer 212 via network 710, and which is rendered by a web browser on electronic device 210. For example, at least a portion of the software application may be an application tool that is embedded in the web page, and which executes in a virtual environment of the web browser. Thus, the application tool may be provided to electronic device 210 via a client-server architecture.) This software application may be a standalone application or a portion of another application that is resident on and which executes on electronic device 210 (such as a software application that is provided by computer 212 or that is installed and which executes on electronic device 210). In an exemplary embodiment, the software product may include human-resources software, which is used by a manager or a representative of human resources.

During the analysis technique, the user of electronic device 210 may provide, via network 710, the organization data for the organization to computer 212. In addition, computer 212 may access, via network 710, the optional external data from one or more other computer(s) 712. The organization data and/or the optional external data may be regularly or periodically received by computer 212, such as: hourly, daily or weekly.

Then, computer 212 may calculate the performance metric for the employee. Moreover, computer 212 may determine the retention risk for the employee. These operations may be repeated multiple times to determine one or more regression models for the employee and/or to determine regression models for multiple employees.

Next, computer 212 may provide, via network 710, the calculated performance metric and the determined retention risk to electronic device 210. Furthermore, the user of electronic device 210 may provide, via network 710, the request. In response, computer 212 may access in a computer-readable memory, and then may provide, via network 710, the retention suggestion and the associated cost-benefit analysis for the employee to electronic device 210. The user may use this information to make decisions as to how to manage, incentivize and/or retain the employee.

Note that information in system 700 may be stored at one or more locations in system 700 (*i.e.,* locally or remotely). Moreover, because this data may be sensitive in nature, it may be encrypted. For example, stored data and/or data communicated via network 710 may be encrypted using symmetric and/or asymmetric encryption techniques (such as public-private key encryption).

FIG. 8 presents a block diagram illustrating a computer system 800 that performs methods 100 (FIGs. 1 and 2), which may correspond to or may include computer 212 (FIGs. 2 and 7). Computer system 800 includes one or more computer processing units or computer processors 810, a communication interface (or a network interface) 812, a user interface 814, and one or more signal lines 822 coupling these components together. Note that the one or more processors 810 may support parallel processing and/or multi-threaded operation, the communication interface 812 may have a persistent communication connection, and the one or more signal lines 822 may constitute a communication bus. Examples of operations performed by one or more processors 810 may include: fetch, decode, execute, and writeback. Moreover, the user interface 814 may include: a display 816 (such as a touch-sensitive display), a keyboard 818, and/or a pointer 820, such as a mouse.

Memory 824 in computer system 800 may include volatile memory and/or nonvolatile memory. Some embodiments of memory 824 may include: *ROM, RAM, EPROM, EEPROM,* flash memory, one or more smart cards, one or more magnetic disc storage devices, and/or one or more optical storage devices. Memory 824 may store an operating system 826 that includes procedures (or a set of instructions) for handling various basic system services for performing hardware-dependent tasks. Memory 824 may also store procedures (or a set of instructions) in a communication module 828. These communication procedures may be used for communicating with one or more computers and/or computer servers (which are sometimes referred to as 'servers'), including computers and/or servers that are remotely located with respect to computer system 800.

Memory 824 may also include multiple program modules (or sets of instructions), including: analysis module 830 (or a set of instructions), employee-management module 832 (or a set of instructions) and/or encryption module 834 (or a set of instructions). Note that one or more of these program modules (or sets of instructions) may constitute a computer-program mechanism.

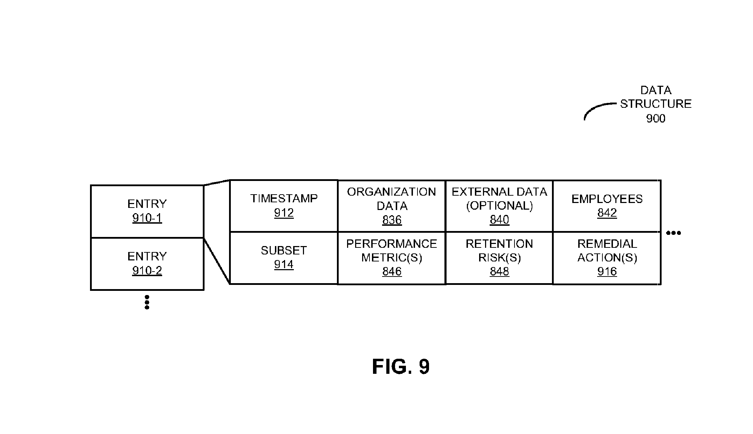

During the analysis technique, analysis module 830 may receive, via communication interface 812 and communication module 828, organization data 836 for an organization 838 and/or optional external data 840. (Alternatively or additionally, analysis module 830 may access, at one or more memory locations in memory 824, organization data 836 and/or optional external data 840.) As noted previously, organization data 836 and/or optional external data 840 may be regularly or periodically received by computer system 800. As shown in FIG. 9, which presents a block diagram illustrating data structure 900, this information may be stored in a data structure (such as a database or an another type of data structure) for subsequent analysis. In particular, data structure 900 includes entries 910, such as organization data 836 and/or optional external data 840 at different time stamps (such as timestamp 912). As described further below, this information may be analyzed one or more times for different employees 842 in subsets (such as subset 914) of organization 838 (FIG. 8) to determine one or more performance metrics 844, one or more retention risks 846 and/or one or more remedial actions 916 (such as one or more retention suggestions 852 and one or more cost-benefit analyses 854 in FIG. 8).

Referring back to FIG. 8, analysis module 830 may calculate one or more performance metrics 844 for one of employees 842. Moreover, analysis module 830 may determine one or more retention risks 846 for the employee. As noted previously, these operations may be repeated multiple times to determine one or more regression models 848 for the employee and/or to determine one or more regression models 848 for employees 842.

Next, employee-management module 832 (such as human-resources software) provides, via communication module 828 and communication interface 812, one or more performance metric 844 and one or more retention risks 846 for the employee. Furthermore, employee-management module 832 (such as human-resources software) provides, via communication module 828 and communication interface 812, one or more retention suggestions 852 and one or more cost-benefit analyses 854 for the employee. The latter information may be in response to an optional request 850 that is received, via communication interface 812 and communication module 828, from a user. As noted previously, the user may use this information to make decisions as to how to manage, incentivize and/or retain the employee.

Because information used in the analysis technique may be sensitive in nature, in some embodiments at least some of the data stored in memory 824 and/or at least some of the data communicated using communication module 828 is encrypted or decrypted using encryption module 834.

Instructions in the various modules in memory 824 may be implemented in: a high-level procedural language, an object-oriented programming language, and/or in an assembly or machine language. Note that the programming language may be compiled or interpreted, e.g., configurable or configured, to be executed by the one or more processors 810. (Thus, when one or more of processors 810 executes one or more of the modules in memory 824, the one or more processors 810 may be considered to be 'programmed' to perform the computational technique.)

Although computer system 800 is illustrated as having a number of discrete items, FIG. 8 is intended to be a functional description of the various features that may be present in computer system 800 rather than a structural schematic of the embodiments described herein. In some embodiments, some or all of the functionality of computer system 800 may be implemented in one or more application-specific integrated circuits (*ASICs*) and/or one or more digital signal processors (*DSPs*). In some embodiments, computer system 800 is implemented using a distributed computing system, such as cloud computing.

Computer system 800, as well as electronic devices, computers and servers in system 800, may include one of a variety of devices capable of manipulating computer-readable data or communicating such data between two or more computing systems over a network, including: a personal computer, a laptop computer, a tablet computer, a mainframe computer, a portable electronic device (such as a cellular telephone or *PDA*), a server, and/or a client computer (in a client-server architecture). Moreover, network 710 (FIG. 7) may include: the Internet, World Wide Web (*WWW*), an intranet, a cellular-telephone network, *LAN, WAN, MAN,* or a combination of networks, or other technology enabling communication between computing systems.

Electronic device 210 (FIGs. 2 and 7), computer 212 (FIGs. 2 and 7), system 700 (FIG. 7), computer system 800 and/or data structure 900 (FIG. 9) may include fewer components or additional components. Moreover, two or more components may be combined into a single component, and/or a position of one or more components may be changed. In some embodiments, the functionality of electronic device 210 (FIGs. 2 and 7), computer 212 (FIGs. 2 and 7), system 700 (FIG. 7), computer system 800 and/or data structure 900 (FIG. 9) may be implemented more in hardware and less in software, or less in hardware and more in software, as is known in the art.

Additionally, the present disclosure includes computer-based techniques for analyzing employee retention probabilities. Some embodiments of the present disclosure relate to a computer-based technique for analyzing employee retention probabilities by performing clustering analysis.

Clustering Analysis of Retention Probabilities

To summarize, the present disclosure provides a computer system that identifies predictors for retention. During operation, the computer system accesses, at a memory location, retention data for individuals, where the retention data includes, as a function of time, retention probabilities that the individuals remain in functions in an organization and a set of potential predictors for the retention probabilities. Then, the computer system generates Kaplan-Meier estimator curves based on the retention data and the set of potential predictors. Moreover, the computer system performs clustering analysis on the Kaplan-Meier estimator curves to determine natural groupings of the Kaplan-Meier estimator curves for the set of potential predictors. Moreover, the computer system identifies the predictors for retention of the individuals based on the determined natural groupings.

Note that the clustering analysis may involve a modified k-means clustering based on an error metric that is other than Euclidean distance. For example, the error metric may include integrated area between a given pair of the Kaplan-Meier estimator curves. Furthermore, the clustering analysis may involve: expectation maximization clustering and/or density clustering. Note that the clustering analysis may be repeated for each of the potential predictors.

In some embodiments, the clustering analysis involves a range of k values, the clustering analysis is repeated N times (where N is an integer), and the determined natural groups may have a k value with minimum values of the error metric over the range of k values. Alternatively, prior to performing the clustering analysis, the computer system may receive a user-specified k value.

Additionally, the identified predictors may be associated with at least natural groupings having a centroid separation exceeding a threshold value. Thus, the centroid separation may be used to identify the potential predictors that are most useful (i.e., the predictors).

In some embodiments, the computer system determines remedial action to increase the retention probabilities based on the identified predictors for retention.

Another embodiment provides a method that includes at least some of the operations performed by the computer system. Another embodiment provides a computer-program product for use with the computer system. This computer-program product includes instructions for at least some of the operations performed by the computer system. Another embodiment provides a user interface for use with the computer system. This user interface provides the determined natural groupings and/or the identified predictors for retention.

Accordingly, embodiments of a computer system, a technique for identifying predictors for retention, and a computer-program product (e.g., software) for use with the computer system are described. During this analysis technique, retention data for individuals in an organization (such as a company) and a set of potential predictors for retention are analyzed to generate Kaplan-Meier estimator curves. Then, clustering analysis is performed to determine natural groupings of Kaplan-Meier estimator curves. Note that the retention data may include, as a function of time, retention probabilities that the individuals remain in functions in an organization and a set of potential predictors for the retention probabilities. Moreover, the predictors for retention in the set of potential predictors are identified based on the determined natural groupings. For example, the identified predictors may be those for which at least two natural groupings have a large centroid separation. Furthermore, the identified predictors for retention may be used to determine remedial action to increase the retention probabilities.

Therefore, by determining the natural groupings, the analysis technique may allow the organization to make better business decisions. For example, the organization may be able to identify the predictors for retention and/or to determine the remedial action. Moreover, the analysis technique may assist the organization in determining how to use limited resources to increase retention (or to reduce attrition) and/or whether it is cost-effective to try to increase retention. In these ways, the analysis technique may assist the organization in managing its employees. Consequently, the analysis technique may facilitate business success of the organization and, thus, commercial activity.

Note that the analysis technique is not an abstract idea. In particular, the quantitative analysis included in the analysis technique is not: a fundamental economic principle, a human activity (the calculations involved in the operations in the analysis technique significantly exceed those of a human because of the very large number of parameters or factors considered), and/or a mathematical relationship/formula. Moreover, the analysis technique amounts to significantly more than an alleged abstract idea. In particular, the analysis technique improves the functioning of a computer or the computer system that executes software and/or implements the analysis technique. For example, the analysis technique: speeds up computation of the Kaplan-Meier estimator curves and the clustering analysis; reduces memory consumption when performing the computations; improves reliability of the computations (as evidenced by increased retention); reduces network latency; improves the user-friendliness of a user interface that displays results of the computations; and/or improves other performance metrics related to the function of the computer or the computer system.

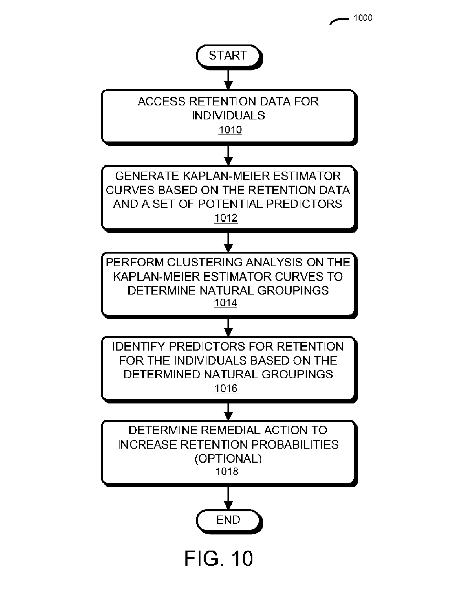

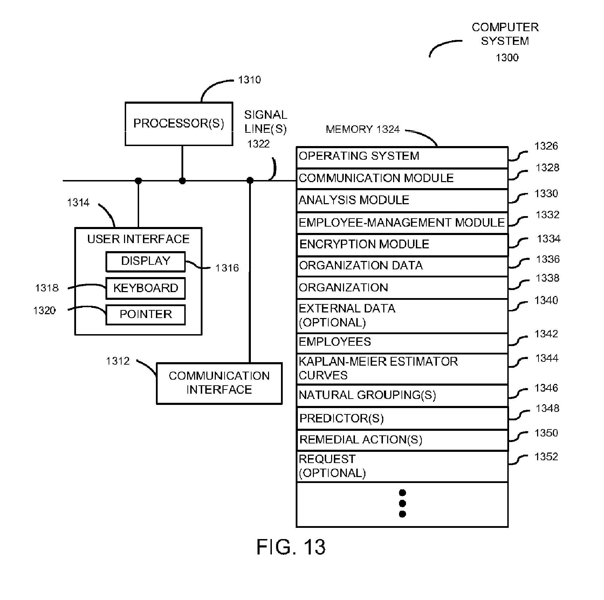

We now describe embodiments of the clustering analysis technique. FIG. 10 presents a flow chart illustrating a method 1000 for identifying predictors for retention, which may be performed by a computer system (such as computer system 1300 in FIG. 13). During operation, the computer system accesses, at a memory location, retention data for individuals (operation 1010), where the retention data includes, as a function of time, retention probabilities that the individuals remain in functions in an organization (or a portion of an organization, such as a location, a department or a group) and a set of potential predictors for the retention probabilities. For example, the computer system may access the retention data of a company via a data portal using a network (such as the Internet). Note that the retention data may include human-resources data and/or operations data (and, more general, organization data of the organization). In particular, the retention data may include: tenure of the employees at the organization (such as the hire dates), job types, functions or job titles in the organization, which clients the employees work with (such as a customer account), regions or locations where the employees work, supervisors or managers of the employees, satisfaction scores associated with the employees (such as rankings provided by customers, managers or other employees, trainers or coaches, etc.), attendance of the employees (such as how often the employees are sick or late for work), compensation of the employees, skills of the employees (such as a skill set), employee attributes (such as an educational background), colleagues of the employees, interaction among employees of the organization (such as email, telephone calls or text messages among the employees), metadata about the employees (such as educational or work-experience attributes), and/or operations information of the organization (such as productivity or revenue data, e.g., products or services that are fabricated or sold as a function of time).

Then, the computer system generates Kaplan-Meier estimator curves (which are sometimes referred to as 'product-limit estimator curves') based on the retention data and the set of potential predictors (operation 1012). Note that Kaplan-Meier estimator curves estimate the survival function (in this case, retention) based on the retention data and the set of potential predictors. For example, a given Kaplan-Meier estimator curve may include a series of horizontal steps of declining magnitude (with an assumed constant value between successive distinct samples or observations). For a large enough sample size, the Kaplan-Meier estimator curve approaches or approximates the true survival function for a population.

Moreover, the computer system performs clustering analysis on the Kaplan-Meier estimator curves to determine natural groupings (operation 1014) of the Kaplan-Meier estimator curves for the set of potential predictors. Note that the clustering analysis may involve a modified $k$-means clustering based on an error metric that is other than Euclidean distance. For example, the error metric may include integrated area between a given pair of the Kaplan-Meier estimator curves. In some embodiments, the error metric is weighted more heavily towards earlier times (when the retention probability is higher) because there may be fewer data points (and thus larger uncertainty in the retention probability) for later times (and smaller retention probabilities). Furthermore, the clustering analysis may involve: expectation maximization clustering and/or density clustering. The clustering analysis may be repeated for each of the potential predictors and/or for each value of each of the potential predictors (for categorical data). Thus, in some embodiments operation 1012 is repeated multiple times for the potential predictors in the set of potential predictors. Consequently, the computer system may use parallel processing or a parallel computation architecture during at least a portion of the analysis technique.

In some embodiments, the clustering analysis involves a range of $k$ values (such as $k$ between 2 and 10), the clustering analysis is repeated $N$ times (where $N$ is an integer, such as 100), and the determined natural groups may have a $k$ value with minimum values of the error metric over the range of k values. Alternatively, prior to performing the clustering analysis, the computer system may receive a user-specified $k$ value.

Next, the computer system identifies the predictors for retention of the individuals based on the determined natural groupings (operation 1016). For example, the identified predictors may be associated with at least natural groupings having a centroid separation exceeding a threshold value (such as N-times the standard deviation of the retention data for either of two adjacent natural groupings, where N is an integer). In particular, the predictors may be identified based on the natural groupings calculated for different iterations of the clustering analysis for the different potential predictors (*i.e.,* retention data for a given potential predictor may be clustered, and the operations may be repeated at least $M$ times for a set of $M$ potential predictors, and the resulting natural groupings may be used to identify the predictors). Thus, the centroid separation may be used to identify the potential predictors that are most useful (*i.e.,* the predictors).

In some embodiments, the computer system optionally determines remedial action to increase the retention probabilities (operation 1018) based on the identified predictors for retention. This remedial action may include organization changes (such as training of an employee or a supervisor, reassigning the employee to a different location or a different supervisor, a promotion, a change in title, changing the employee's work responsibility, changing the employee's supervisor, etc.) and/or incentives (such as compensation changes or financial incentives, *e.g.,* a one-time bonus or a pay increase, and non-financial incentives, *e.g.,* recognition among other employees). Note that financial incentives are expensive and may not be possible given limited resources. In addition, financial incentives may not accomplish the desired goal of retaining an employee. In particular, financial reward is but one component of employee compensation and, depending on the employee, other factors may be more important. Thus, once a minimum acceptable salary is obtained, further increases in salary may have diminished returns as a retention incentive. Moreover, different employees may be motivated by different types of incentives, such as recognition or a feeling of accomplishment. These effects may be identified using the analysis technique (and, therefore, taken into account) when determining the remedial action for a given individual. In some embodiments, determining the remedial action includes a cost-benefit analysis based on the expected efficacy of the remedial action (in terms of how much longer the given individual may remain with the organization in response to the remedial action). For example, the remedial action may be to offer additional training opportunities to an employee to help them improve their skills. This remedial action may cost $20,000, but may be predicted to keep the employee from leaving for several months, which may more than offset the incremental expense (thereby justifying the use of the remedial action).

The aforementioned analysis technique may allow employees (and, more generally, individuals) to be clustered into natural groups so that the incentive preferences of different employees can be identified. Furthermore, the identified predictors for retention and/or the determined remedial action may be provided by the computer system to a manager or a supervisor of an employee in the organization. Alternatively or additionally, the computer system may provide this information to a representative of human resources for the organization. The manager or the representative of human resources may use the information to make informed decisions as to how to increase the retention probability of one or more individuals in the organization. Thus, the analysis technique may: reduce noise in the results, allow underlying trends and associations in the retention data to be identified, and provides actionable feedback on trends in different subsets of the organization (such as different groups or employees that work for the same manager or supervisor).

While the preceding discussion using a modified *k*-means clustering as an illustration in operation 1012, in other embodiments a wide variety of clustering techniques may be used, including: hierarchical clustering, another type of centroid-based clustering (such as *k*-medians clustering, *k*-means++ clustering, fuzzy clustering, etc.), distribution-based clustering, density-based clustering, sub-space clustering, and/or correlation clustering. Thus, the specific embodiments are used for purposes of illustration only, and one or more other clustering techniques may be used. The analysis technique may be repeated periodically or after a time interval (such as one week, a month, six months, a year, etc.).

Note that the analysis technique may be implemented by a third party (such as a separate company) that provides a service to the organization. Alternatively, the organization may use the analysis technique to manage its own employees. In some embodiments, the analysis technique is included as a service that compliments recruiting efforts, so that a new hire does not leave the organization. In these embodiments, the analysis technique may be viewed as a form of insurance for the recruiter and/or the organization.

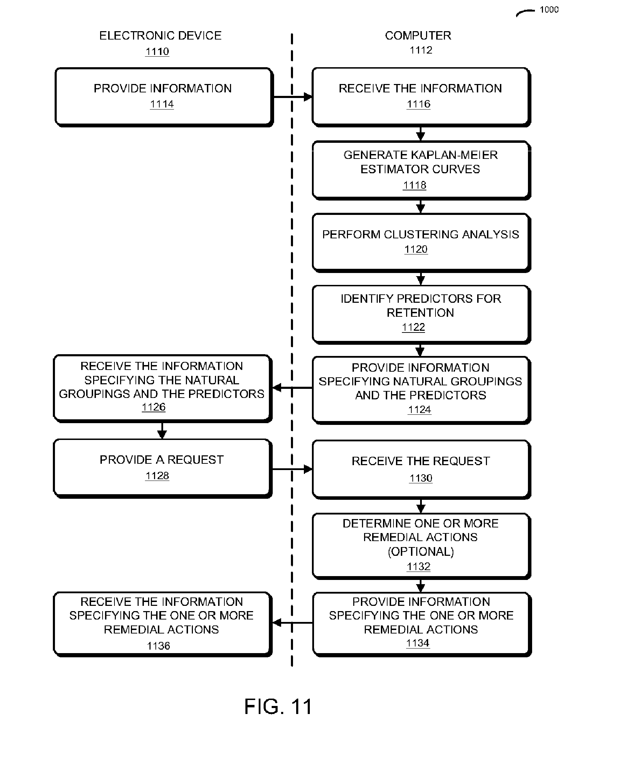

In an exemplary embodiment, the analysis technique is implemented using one or more electronic devices (such as a computer, a server or a computer system) and one or more computers (such as a server or a computer system), which communicate through a network, such as a cellular-telephone network and/or the Internet. This is illustrated in FIG. 11, which presents a flow chart illustrating method 1000 (FIG. 10).

During the method, electronic device 1110 may provide (operation 1114) and computer 1112 may receive (operation 1116) information, such as the organization data for the organization and/or the optional external data (such as an unemployment rate in a region that includes the organization, hiring trends in the region, retention of employees by competitors of the organization, proximity of the competitors of the organization, compensation offered by the competitors, and/or activity of employees on a social network, e.g., looking at job postings). Note that the organization data and/or the optional external data may include the retention data.

Then, computer 1112 may generate Kaplan-Meier estimator curves (operation 1118) based on the retention data and the set of potential predictors of retention. Moreover, computer 1112 may perform the clustering analysis (operation 1120) for the Kaplan-Meier estimator curves associated with one or more potential predictors to determine the natural groupings.

Next, computer 1112 may identify the predictors for retention (operation 1122) of the one or more individuals based on the determined natural groupings.

Furthermore, computer 1112 may provide (operation 1124) and electronic device 1110 may receive (operation 1126) information specifying the natural groupings and/or the identified predictors. In response, a user of electronic device 1110 may provide (operation 1128) and computer 1112 (operation 1130) may receive a request for one or more remedial actions that impact retention (*i.e.,* reduce attrition) for one or more individuals.

Additionally, computer 1112 may optionally determine the one or more remedial actions (operation 1132) to increase one or more retention probabilities of one or more individuals based on the identified predictors for retention. In some embodiments, computer 1112 provides (operation 1134) and electronic device 1110 receives (operation 1136) information specifying the determined one or more remedial actions.

Method 1000 (FIGs. 10 and 11) may involve additional or fewer operations. Moreover, the order of the operations may be changed, and/or two or more operations may be combined into a single operation.

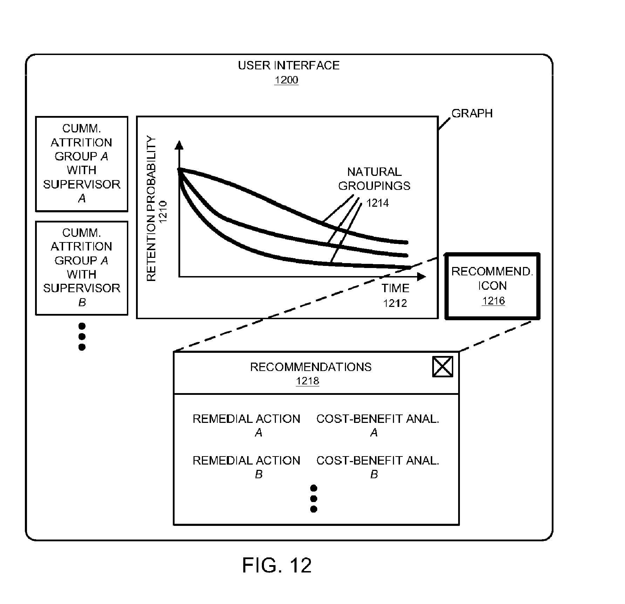

As described previously, in an exemplary embodiment the analysis technique may be used to calculate the natural groupings and to identify the predictors of retention. As shown in FIG. 12, which presents a drawing of a user interface 1200 with a graph of cumulative retention probability 1210 (or survival) for a set of potential predictors as a function of time 1212 (such as days of service). However, the Kaplan-Meier estimator curves for all the values of the set of potential predictors may be very noisy and/or may overlap considerably. Consequently, it may difficult to see the individual Kaplan-Meier estimator curves, let along important trends, when all of the Kaplan-Meier estimator curves are plotted. Instead, by using the analysis technique with k equal to three, natural groupings 1214 may be calculated. These natural groups may maximize the centroid spacing or the integrated area between pairs in natural groupings 1214.

Moreover, potential predictors associated with different natural groupings (such as those computed for different locations, job types, clients, regions, supervisors, etc.) may then be identified as the predictors of retention. Note that retention probability 1210 as a function of time 1212 may be represented using Kaplan-Meier estimator curves and the predictors may be identified using a Cox proportional hazards model (to model modifications to decay rates).

For example, using the clustered Kaplan-Meier estimator curves, comparisons may be presented of the cumulative attrition impact of different supervisors on particular groups of employees. Thus, it may be founds that there may be a loss of 20 employees with supervisor A after 6 months, while the loss with supervisor B may be 150 employees. The associated financial impact of this attrition may also be presented. This analysis may be performed for the entire dataset or for one or more subsets, such as a particular location (e.g., San Francisco), department and/or job type (e.g., sales). Thus, if the supervisor of a particular natural group is switched, the median employee tenure may increase by 60% to 73 days, which may result in an annual savings of $115,175. User interface 1200 may display the cumulative impact of such counter-factual analysis. In addition, user interface 1200 may present the relative impact on attrition of particular values of a predictor (such as the supervisor) and/or may rank the values of the predictor (such as the retention performance of different supervisors).

User interface 1200 may be displayed graphically for one or more employees to a user of the human-resources software, such as a manager at the organization or a representative of human resources. This may allow the user to make informed and intelligent decision when managing the employees to increase retention. For example, the user may activate a recommendation icon 1216 if they wish to see one or more remedial actions in recommendations 1218 that may increase retention for one of natural groupings 1214 (and, more generally, for one or more individuals).

In an exemplary embodiment with k equal to three (representing, for example, three different supervisors), three random data points are selected in the Kaplan-Meier estimator curves and centroids (and error metrics) are calculated based on the surrounding clusters. Then, these operations are repeated 100 times and the three centroids with the lowest error metrics are the natural groupings. Note that the calculations in the analysis technique may be implemented using matrices, and (as discussed previously) the calculations in the clustering analysis may be performed by the computer system in parallel. This may allow results to be obtained even for a large number of different values for the potential predictors (and, thus, a large number of instances of the clustering analysis). In particular, $k$ may be between 2 and 10, there may be 25 potential predictors, and the analysis may be repeated 100 times. In addition, the 25 potential predictors may have up to 2500 values (some may have a larger range than others). Therefore, the total number of instances of the clustering may be quite larger in embodiments where the clustering analysis is performed for each value of k and each value of a given potential predictors. For example, there may be as many as 100 million potential predictors.

FIG. 7, as described above, presents a block diagram illustrating a system 700 that can be used, at least in part, to perform operations in method 1000 (FIGs. 10 and 11). Electronic device 210 as shown in FIG. 7 is similar to electronic device 1110 in FIG. 11. Additionally, computer 212 as shown in FIG. 7 is similar to computer 1112 in FIG. 11. Accordingly, electronic device 1110 and computer 1112 will be discussed herein with regard to their interaction with network 710 and other computer(s) 712.

During the analysis technique, the user of electronic device 1110 may provide, via network 710, the organization data, including retention data, for the organization to computer 1112. In addition, computer 1112 may access, via network 710, the optional external data from one or more other computer(s) 712. This optional external data may be stored at another memory location. The organization data and/or the optional external data may be regularly or periodically received by computer 1112, such as: hourly, daily or weekly.

Then, computer 1112 may generate Kaplan-Meier estimator curves based on retention data and a set of potential predictors of retention in the organization data. Moreover, computer 1112 may perform the clustering analysis on Kaplan-Meier estimator curves to determine the natural groupings. Next, computer 1112 may identify the predictors for retention of the one or more individuals based on the determined natural groupings.

Furthermore, computer 1112 may provide, via network 710, and electronic device 1110 may receive the information specifying the natural groupings and/or the identified predictors. In response, a user of electronic device 1110 may provide, via network 710, and computer 1112 may receive a request for one or more remedial actions that impact retention (i.e., reduce attrition) for one or more individuals. For example, the user may activate a recommendation icon in a user interface to request the one or more remedial actions.

Additionally, computer 1112 may optionally determine the one or more remedial actions to increase the retention probabilities based on the identified predictors for retention. For example, computer 1112 may optionally access one or more predetermined remedial actions in a computer-readable memory and/or computer 1112 may calculate the one or more remedial actions. Additionally, computer 1112 may provide, via network 710, and electronic device 1110 may receive the determined one or more remedial actions.

Note that information in system 700 may be stored at one or more locations in system 700 (*i.e.,* locally or remotely). Moreover, because this data may be sensitive in nature, it may be encrypted. For example, stored data and/or data communicated via network 710 may be encrypted using symmetric and/or asymmetric encryption techniques (such as public-private key encryption).

FIG. 13 presents a block diagram illustrating a computer system 1300 that may perform methods 1000 (FIGs. 10 and 11), which may correspond to or may include computer 1112 (FIGs. 7 and 11). Computer system 1300 includes one or more computer processing units or computer processors 1310, a communication interface 1312, a user interface 1314, and one or more signal lines 1322 coupling these components together. Note that the one or more processors 1310 may support parallel processing and/or multi-threaded operation, the communication interface 1312 may have a persistent communication connection, and the one or more signal lines 1322 may constitute a communication bus. Examples of operations performed by one or more processors 1310 may include: fetch, decode, execute, and writeback. Moreover, the user interface 1314 may include: a display 1316 (such as a touch-sensitive display), a keyboard 1318, and/or a pointer 1320, such as a mouse.

Memory 1324 in computer system 1300 may include volatile memory and/or nonvolatile memory. Some embodiments of memory 1324 may include: *ROM, RAM, EPROM, EEPROM,* flash memory, one or more smart cards, one or more magnetic disc storage devices, and/or one or more optical storage devices. Memory 1324 may store an operating system 1326 that includes procedures (or a set of instructions) for handling various basic system services for performing hardware-dependent tasks. Memory 1324 may also store procedures (or a set of instructions) in a communication module 1328. These communication procedures may be used for communicating with one or more computers and/or computer servers (which are sometimes referred to as 'servers'), including computers and/or servers that are remotely located with respect to computer system 1300.

Memory 1324 may also include multiple program modules (or sets of instructions), including: analysis module 1330 (or a set of instructions), employee-management module 1332 (or a set of instructions) and/or encryption module 1334 (or a set of instructions). Note that one or more of these program modules (or sets of instructions) may constitute a computer-program mechanism.

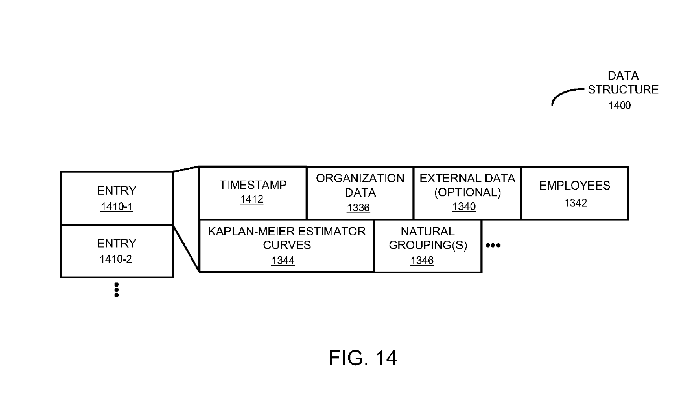

During the analysis technique, analysis module 1330 may receive, via communication interface 1312 and communication module 1328, organization data 1336 for an organization 1338 (which may include the retention data and the potential predictors) and/or optional external data 1340. (Alternatively or additionally, analysis module 1330 may access, at one or more memory locations in memory 1324, organization data 1336 and/or optional external data 1340.) As noted previously, organization data 1336 and/or optional external data 1340 may be regularly or periodically received by computer system 1300. As shown in FIG. 14, which presents a block diagram illustrating data structure 1400, this information may be stored in a data structure (such as a database or an another type of data structure) for subsequent analysis. In particular, data structure 1400 includes entries 1410, such as organization data 1336 and/or optional external data 1340 at different time stamps (such as timestamp 1412). As described further below, this information may be clustered for different Kaplan-Meier estimator curves 1344 to determine one or more natural groupings 1346. For example, retention data in organization data 1336 for a set of potential predictors of retention may be clustered using the analysis technique.

Referring back to FIG. 13, analysis module 1330 may identify one or more predictors 1348 based on the determined natural groupings 1346. Moreover, analysis module 1330 may determine one or more remedial actions 1350 for one or more of employees 1342 (such as for those in one of natural groupings 1346). As noted previously, these operations may be repeated, as needed, multiple times.

Next, employee-management module 1332 (such as human-resources software) provides, via communication module 1328 and communication interface 1312, information specifying one or more natural groupings 1346 and/or one or more remedial actions 1350. The latter information may be in response to an optional request 1352 that is received, via communication interface 1312 and communication module 1328, from a user. As noted previously, the user may use this information to make decisions as to how to manage, incentivize and/or retain the employee.

Because information used in the analysis technique may be sensitive in nature, in some embodiments at least some of the data stored in memory 1324 and/or at least some of the data communicated using communication module 1328 is encrypted or decrypted using encryption module 1334.

Instructions in the various modules in memory 1324 may be implemented in: a high-level procedural language, an object-oriented programming language, and/or in an assembly or machine language. Such instructions can be implemented upon execution by one or more computer processors. Note that the programming language may be compiled or interpreted, *e.g.,* configurable or configured, to be executed by the one or more processors 1310. (Thus, when one or more of processors 1310 executes one or more of the modules in memory 1324, the one or more processors 1310 may be considered to be 'programmed' to perform the computational technique.)

Although computer system 1300 is illustrated as having a number of discrete items, FIG. 13 is intended to be a functional description of the various features that may be present in computer system 1300 rather than a structural schematic of the embodiments described herein. In some embodiments, some or all of the functionality of computer system 1300 may be implemented in one or more application-specific integrated circuits (*ASICs*) and/or one or more digital signal processors *(DSPs).* In some embodiments, computer system 500 is implemented using a distributed computing system, such as cloud computing.

Computer system 1300, as well as electronic devices, computers and servers in system 1300, may include one of a variety of devices capable of manipulating computer-readable data or communicating such data between two or more computing systems over a network, including: a personal computer, a laptop computer, a tablet computer, a mainframe computer, a portable electronic device (such as a cellular telephone or *PDA),* a server, and/or a client computer (in a client-server architecture). Moreover, network 710 (FIG. 7) may include: the Internet, World Wide Web (WWW), an intranet, a cellular-telephone network, *LAN, WAN, MAN,* or a combination of networks, or other technology enabling communication between computing systems.

Electronic device 1110 (FIGs. 7 and 11), computer 1112 (FIGs. 7 and 11), system 700 (FIG. 7), computer system 1300 and/or data structure 1400 (FIG. 14) may include fewer components or additional components. Moreover, two or more components may be combined into a single component, and/or a position of one or more components may be changed. In some embodiments, the functionality of electronic device 1110 (FIGs. 11 and 7), computer 1112 (FIGs. 11 and 7), system 700 (FIG. 7), computer system 1300 and/or data structure 1400 (FIG. 14) may be implemented more in hardware and less in software, or less in hardware and more in software, as is known in the art.

Additionally, the present disclosure includes computer-based techniques for modifying assessment techniques. Some embodiments of the present disclosure relate to a computer-based technique for modifying an assessment technique based on analysis of organization data using a panel method.

Adapting Assessments Using a Panel method

The present disclosure also provides a computer system that modifies an assessment technique (such as an employee questionnaire). During an example operation, the computer system accesses, at a memory location, organization data for an organization and information specifying the assessment technique, where the organization data includes time samples of a performance metric for individuals in the organization and features that are assessed using the assessment technique. Then, the computer system generates a predictive model that predicts the performance metric based on a subset of the features. Moreover, the computer system modifies the assessment technique based on the predictive model to assess the subset of the features.

Note that the generating may involve a panel method that accounts for correlations in the time samples. For example, the predictive model may include a time-variant component based on averages of the performance metric and the subset of the features and a time-invariant component based on deviations from the averages of the performance metric and the subset of the features. Moreover, weights of the time-variant component and the time-invariant component in the predictive model may be inversely related to variances of the time-variant component and the time-invariant component. Thus, the predictive model may include a so-called 'random effects estimator.' However, in other embodiments the predictive model includes a so-called 'fixed effects estimator' and/or a so-called 'between estimator.'

Furthermore, the performance metric may include: customer satisfaction, average time to handle a customer, and/or adherence to a schedule. Additionally, the features may include: abilities of the individuals, characteristics of one or more positions, an environment of the organization that includes the one or more positions, experience of the individuals, training of the individuals, and/or relationships among the individuals and with supervisors.

In some embodiments, the modifying is based on drop-off of individuals during the assessment technique as a function of a length of the assessment technique and/or marginal predictive power of the factors in the subset of the factors. Thus, the modified assessment technique may represent a tradeoff between the likelihood of completion of the assessment technique by an individual and the number of factors in the subset of the factors that are included in the modified assessment technique. Moreover, the modified assessment technique may ensure that the individual reaches a predefined level of proficiency or value of the performance metric in a given position after a time interval has elapsed.

Another embodiment provides a method that includes at least some of the operations performed by the computer system. Another embodiment provides a computer-program product for use with the computer system. This computer-program product includes instructions for at least some of the operations performed by the computer system. Another embodiment provides a user interface for use with the computer system. This user interface provides information about the subset of the features and/or the modified assessment technique.

Accordingly, embodiments of a computer system, a technique for modifying an assessment, and a computer-program product (*e.g.*, software) for use with the computer system are described. During this analysis technique, time samples of a performance metric for individuals in an organization (such as a company) and features that are assessed using an assessment technique (such as a questionnaire) are analyzed using a panel method. In particular, a predictive model that predicts the performance metric based on a subset of the features is generated using the panel method. Then, the assessment technique is modified based on the predictive model to assess the subset of the features. For example, the modified assessment technique may represent a tradeoff between a likelihood of completion of the assessment technique by an individual and a number of factors in the subset of the factors that are included in the modified assessment technique (such as those that have a high marginal predictive power).

By modifying the assessment technique, the analysis technique may allow the organization to perform better assessments and, thus, to better identify individuals that are well suited for positions or assignments in the organization. For example, the organization may be able to identify the subset of the features that are the best predictors for the performance metric, and may be able to carefully assess candidates (or job applicants) based on the identified subset using the modified assessment technique. In these ways, the analysis technique may assist the organization in managing existing employees (such as internal transfers between different jobs or job types) and/or hiring new employees. Consequently, the analysis technique may facilitate business success of the organization and, thus, commercial activity.

Note that the analysis technique is not an abstract idea. In particular, the quantitative analysis included in the analysis technique is not: a fundamental economic principle, a human activity (the calculations involved in the operations in the analysis technique significantly exceed those of a human because of the very large number of parameters or factors considered), and/or a mathematical relationship/formula. Moreover, the analysis technique amounts to significantly more than an alleged abstract idea. In particular, the analysis technique improves the functioning of a computer or the computer system that executes software and/or implements the analysis technique. For example, the analysis technique: speeds up computation of the predictive models; reduces memory consumption when performing the computations; improves reliability of the computations (as evidenced by improved assessment techniques); reduces network latency; improves the user-friendliness of a user interface that displays results of the computations; and/or improves other performance metrics related to the function of the computer or the computer system.

In the discussion that follows, an employee may include: an individual or a person. Furthermore, an 'organization' should be understood to include: businesses, for-profit corporations, non-profit corporations, groups of individuals, sole proprietorships, government agencies, partnerships, etc.

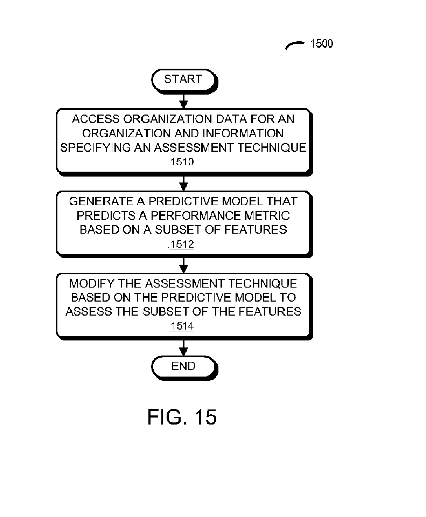

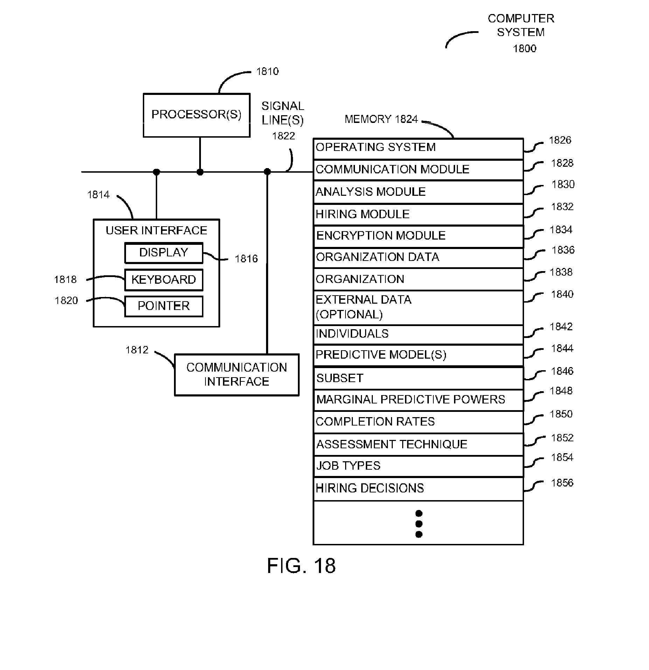

We now describe embodiments of the analysis technique. FIG. 15 presents a flow chart illustrating a method 1500 for modifying an assessment technique (such as a questionnaire), which may be performed by a computer system (such as computer system 1800 in FIG. 18). During operation, the computer system accesses, at a memory location, organization data for an organization and information specifying the assessment technique (operation 1510), where the organization data includes time samples (or longitudinal data) of a performance metric for individuals in the organization (such as a categorical factor) and features that are assessed using the assessment technique. For example, the computer system may access the organization data of a company and/or the information specifying the assessment technique via a data portal using a network (such as the Internet). Note that the organization data may include human-resources data and/or operations data (and, more general, organization data of the organization). In particular, the organization data may include: information specifying individuals (such as employee identifiers), tenure of the employees at the organization (such as the hire dates), job types, functions or job titles in the organization, which clients the employees work with (such as a customer account), regions or locations where the employees work, supervisors or managers of the employees, satisfaction scores associated with the employees (such as rankings provided by customers, managers or other employees, trainers or coaches, etc.), attendance of the employees (such as how often the employees are sick or late for work), compensation of the employees, skills of the employees (such as a skill set), employee attributes (such as an educational background, work experience, etc.), colleagues of the employees, interaction among employees of the organization (such as email, telephone calls or text messages among the employees), metadata about the employees (such as educational or work-experience attributes), assessment scores of the employees, a time of year or the season, and/or operations information of the organization (such as productivity or revenue data, e.g., products or services that are fabricated or sold as a function of time).

Therefore, the performance metric included in the organization data may include: customer satisfaction, average time to handle a customer, and/or adherence to a schedule. However, these examples are for purposes of illustration, and the performance metric may include a wide variety of factors that can be measured repeatedly over time at the level of an individual employee. Additionally, the features in the organization data may include: abilities of the individuals, characteristics of one or more positions, an environment of the organization that includes the one or more positions, experience of the individuals, training of the individuals, and/or relationships among the individuals and with supervisors.

Then, the computer system generates a predictive model that predicts the performance metric based on a subset of the features (operation 1512). This generating may involve a panel method that: accounts or controls for site, client and temporal effects (such as correlations); models performance and improvement over time; eliminates the impact of agent departure (such employee attrition); uses a single day as the observation instead of bins; can handle balanced or unbalanced data; and/or tests hypotheses and displays 95% confidence intervals. For example, the predictive model may include a time-variant component (which emphasizes features such as: days of service, supervisor, etc.) based on averages of the performance metric and the subset of the features and a time-invariant component (which emphasizes features such as: assessment scores, client, trainer, location, etc.) based on deviations from the averages of the performance metric and the subset of the features. Moreover, weights of the time-variant component and the time-invariant component in the predictive model may be inversely related to variances of the time-variant component and the time-invariant component. For example, the weights in the predictive model may be

$$\frac{\dfrac{PM_{tv}}{V_{tv}} + \dfrac{PM_{ti}}{V_{ti}}}{\dfrac{1}{V_{tv}} + \dfrac{1}{V_{ti}}},$$

where $PM_{tv}$ is the time-variant component in the predictive model, $PM_{ti}$ is the time-invariant component in the predictive model, $V_{tv}$ is the time-variant variance, and $V_{ti}$ is the time-invariant variance. Thus, the predictive model may include a so-called 'random effects estimator.' However, in other embodiments the predictive model includes a so-called 'fixed effects estimator' and/or a so-called 'between estimator.' Note that the use of the panel method may result in predictive-model estimates with 95% confidence using 2-3 times smaller sample sizes than other analysis techniques. In general, the panel method may be applied to panel or longitudinal data with multiple dimensions (or phenomena) and that includes observations as a function of time (and, in particular, over multiple time intervals for the same individuals).

Moreover, the computer system modifies the assessment technique based on the predictive model to assess the subset of the features (operation 1514). In particular, the modifying may be based on drop-off of individuals during the assessment technique as a function of a length of the assessment technique and/or marginal predictive power of the factors in the subset of the factors. Thus, the modified assessment technique may represent a tradeoff between the likelihood of completion of the assessment technique by an individual and the number of factors in the subset of the factors that are included in the modified assessment technique (which may be restricted to those that have high marginal predictive power).

The aforementioned analysis technique may allow the organization to conduct more efficient and meaningful assessments (in the sense that the assessment technique may be better able to identify those individuals who will perform better in a given position based on the performance metric). Consequently, a manager or a supervisor of a prospective employee in the organization and/or a representative of human resources for the organization can use the analysis technique to improve the hiring practices of the organization. In this way, the analysis technique may help the organization improve its human capital in a targeted manner (specific to a particular position or job type in the organization), which may help the organization compete and succeed in the marketplace.

While the preceding discussion using a panel method to generate the predictive model, a wide variety of supervised-learning or machine-learning techniques may be used separately or in conjunction with the panel method, such as: linear regression, nonlinear regression, logistic regression, neural networks, support vector machines, LASSO, ridge regression, naive Bayes, Bayesian multivariate, random forests, classification and regression trees, nonparametric analysis, another machine-learning technique, etc. Thus, the specific embodiments are used for purposes of illustration only, and one or more other supervised-learning techniques may be used. The analysis technique may be repeated periodically or after a time interval (such as one week, a month, six months, a year, etc.). Alternatively, the analysis technique may be repeated for different positions or job types in the organization, which may allow a set of targeted assessment techniques for these job types to be generated.

Note that the analysis technique may be implemented by a third party (such as a separate company) that provides a service to the organization. Alternatively, the organization may use the analysis technique to manage its own employees and to facilitate improved hiring. In some embodiments, the analysis technique is included as a service that compliments recruiting efforts, so that the best candidates for a particular job type are identified.

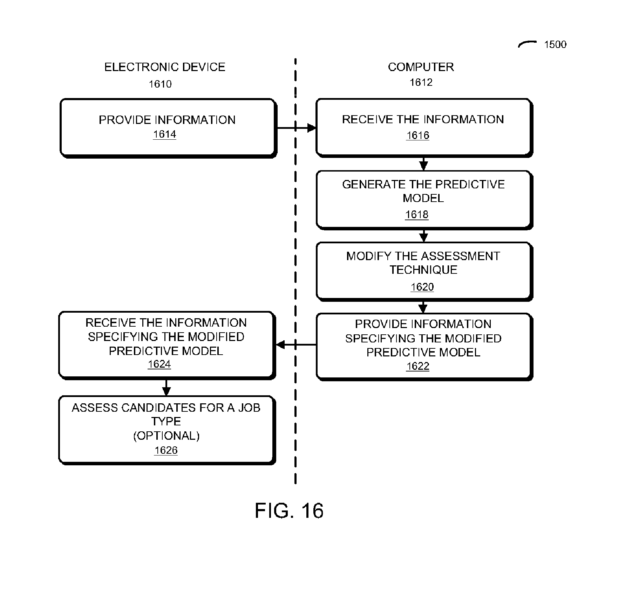

In an exemplary embodiment, the analysis technique is implemented using one or more electronic devices (such as a computer, a server or a computer system) and one or more computers (such as a server or a computer system), which communicate through a network, such as a cellular-telephone network and/or the Internet. This is illustrated in FIG. 16, which presents a flow chart illustrating method 1500 (FIG. 15).

During the method, electronic device 1610 may provide (operation 1614) and computer 1612 may receive (operation 1616) information, such as the organization data for the organization and/or optional external data (such as an unemployment rate in a region that includes the organization, hiring trends in the region, retention of employees by competitors of the organization, proximity of the competitors of the organization, compensation offered by the competitors, and/or activity of employees on a social network, e.g., looking at job postings). Note that the organization data and/or the optional external data may include the performance metric and the features.

Then, computer 1612 may generate the predictive model (operation 1618) that predicts the performance metric based on a subset of the features.

Moreover, computer 1612 may modify the assessment technique (operation 1620) based on the predictive model to assess the subset of the features.

Furthermore, computer 1612 may provide (operation 1622) and electronic device 1610 may receive (operation 1624) information specifying the modified assessment technique.

In some embodiments of method 1500, there are additional or fewer operations. For example, electronic device 1610 may optionally use the modified assessment technique to assess candidates for a job opening (operation 1626) or job type. Alternatively or additionally, the operations in method 1500 may be repeated *(e.g.,* every month), so that the assessment technique is dynamically updated. Moreover, the order of the operations may be changed, and/or two or more operations may be combined into a single operation.

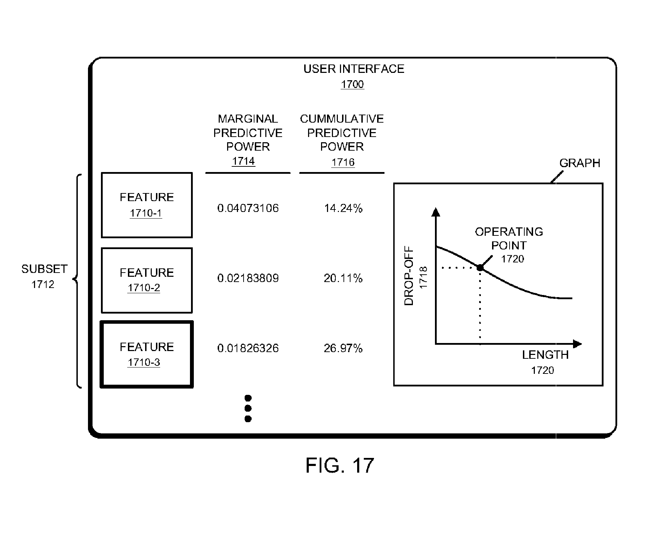

As described previously, in an exemplary embodiment the analysis technique may be used to modify the assessment technique. As shown in FIG. 17, which presents a drawing of a user interface 1700, features 1710 in subset 1712 may be displayed in a ranked order along with their corresponding marginal predictive power 1714 (such as $R^2$) in the predictive model and/or the cumulative predictive power 1716. In addition, a graph with drop-off of individuals 1718 during an assessment technique as a function of a length 1720 of the assessment technique (such as the number of questions or pages in a questionnaire) may be displayed.

User interface 1700 may be displayed graphically for one or more employees to a user of the human-resources software, such as a manager at the organization or a representative of human resources. This may allow the user to make informed and intelligent decision when managing existing employees (such as requests for job transfers) and/or the hiring of new employees. For example, a user may select a cutoff in subset 1712 by clicking on or activating one of features 1710, and the corresponding operating point 1722 in the graph may be displayed. This may allow the user to specify the parameters of the modified assessment technique *(e.g.,* the number of factors that are assessed) so that a suitable tradeoff between the number of questions or pages and the completion rates of individuals that are assessed is obtained. For example, the modified assessment technique may assess features having marginal predictive power greater than 50% and the completion rate may be greater than 85%. The modified assessment technique may assess the relevant features using a set of questions that are contained in the pages of a questionnaire.

In an exemplary embodiment, the predictive model predicts performance metrics such as customer satisfaction, the average time needed to handle a customer or schedule adherence based on factors such as: abilities of employees (their assessment scores, days of service, etc.), employee training, and employee work environments *(e.g.,* their supervisor, location, the region surrounding their location, the season, job types, etc.). The predictive model may include 7 or 8 features with hundreds or thousands of values, and it may be generated based on observations over 12 months on 10,000 employees (or individuals). For example, there may be 3000-4000 supervisors, 50 locations, 6 or 7 job types, 12-24 departments, etc. Note that the dataset used to generate the predictive model may include: 60% for training, 30% for validation or optimization, and 10% for testing or to confirm the results. When generating the predictive model, the analysis may be repeated 20 times and the best performing instance of the predictive model may be used in method 1500 (FIGs. 15 and 16).

The predictive model may be used to adapt or modify the assessment technique so that the resulting modified assessment technique assess candidates based on their likely performance in a particular job, as opposed to assessing their traits or attributes. In particular, the predictive model may indicate which features are predictive of performance *(i.e.,* the performance metric) which allows the assessment technique to be modified or adapted so that it reflects likely performance.

The analysis technique may also allow a desired goal, such as the ability to identify candidates who can achieve a value of the performance metric within a predefined time interval, to be built in to the assessment technique using the organization data and the panel method. This is in contrast with approaches in which: subject-matter experts compose a questionnaire that attempts to assess or test how suitable candidates are for job requirements, candidates are scored based on their responses to the questions; and then the assessment scores are correlated with workforce-performance outcomes. Such an existing approach cannot ensure that the candidates will achieve the value of the performance metric within the predefined time interval.

In another exemplary embodiment, organization data is combined from several sources to map out an employees' daily performance along with assessment data on their knowledge, skills, and abilities. For example, the organization data may include: pre-hire assessment data (such as the responses to an assessment technique), human-resources management system data (such as employee-level data indicating an employee's hire data, their location, their job type, and other relevant attributes), and performance-management-system data (such as daily, weekly, or monthly data feeds capturing employee performance on a variety of different metrics, e.g., schedule adherence, absenteeism, customer satisfaction, etc.). These different data feeds may be merged via a single identifier field and a dataset is created in which the unit of observation is a single employee-day (or employee-week or employee-month, depending the on periodicity of the underlying data) and the fields represent employee performance on each day, week, month, the employee's hire date, or the employee's response to the questions in the pre-hire assessment (such as the assessment technique.

Using one or more panel methods, the assessment technique that is used to assess candidates for jobs is adjusted so that the resulting assessment scores are well aligned with the likelihood of employees reaching a particular level of proficiency in the jobs within a predefined time interval (such as several weeks). In particular, from the dataset (which may be a single, flat file), the computer system applies a panel-data technique *(i.e., the panel method)* in order to analyze the dataset. Because the dataset may include daily, weekly, or monthly data points (as well as the employee's hire date), the day, week, or month of service on which the performance metric was measured can be calculated. Additionally, the dataset may be combined with pre-hire assessment data such that an employee's response to a given pre-hire assessment item or question may be coded as a continuous variable with each response represented by a single numeric value *(e.g.,* '1' indicates yes, '2' indicates no).

Then, a random effects estimator or regression may be performed while interacting the: day, week, or month of service; day, week, or month of service squared; and/or a categorical variable representing the response to each pre-hire assessment item. (Note that a random effects estimator may be used because the employee's responses to the content in the assessment technique may be time invariant.) In addition, the generated predictive model may include one or more control features, such as: an employee's location, their job type, and/or other features that may impact the performance metric.

Given the number of interactions present in the analysis, the computer system may run or perform the random effects estimator iteratively for each question in the assessment technique. After this analysis, the computer system may use the estimates produced by the random effects estimator to calculate the marginal effects of each group of responses *(e.g.,* the '1's and '2's) for each day, week, or month until a pre-specified cut-off period. When these marginal effects are plotted on a single graph, they may provide the equivalent of a 'learning curve' that, for each group of responses with respect to a single performance metric, reveals: the starting point *(i.e.,* the intersection); the rate of improvement *(i.e.,* the slope); and the plateau (or the curvature). Thus, the marginal effects calculated from the random effects estimator may allow a user of the computer system to visualize the performance spread between individuals who responded in a different way to the content in the assessment technique.

These curves may be generated by the computer system for one or more performance metrics across each available assessment item or question. The result is large volume of output that represents the number of performance metrics times the number of assessment items in the assessment technique. Then, the results are compiled and analyzed by the computer system, which identifies the assessment items for which there is a statistically significant gap (*p*-value less than 0.05) in the curves representing the response for these assessment items. When such a statistically significant gap (or 'spread') exists, an assessment item may be considered to be predictive and its weighting within the assessment score may be increased. Alternatively, when there is no gap or the gap is not statistically significant, the weighting applied to such an assessment item may be decreased or even set equal to zero. In this way, the assessment technique may be modified based on the generated predictive model.

Note that the assessment scoring determined from the responses to the assessment technique may be performed in a multi-tiered manner. For example, assessment-item scores within a single scale may be averaged together in order to calculate a single-scale assessment score. Moreover, the single-scale assessment score may be averaged to calculate a single competency score. Furthermore, these competency scores may be averaged to calculate a single performance-factor score. Additionally, these performance factor scores may be compared to predefined cut-off points in order to determine whether a candidate or applicant's score on a single performance factor should be classified as a 'red,' a 'yellow,' or a 'green' score. Next, the red, yellow, and green scores of each performance factor may be aggregated using a truth table in order to calculate a single job-fit factor score.

After the computer system has adjusted or optimized the scoring technique in this manner, performance curves by job-fit factor may be generated in much the same way as the assessment-item-level performance curves. Moreover, the revised green, yellow, and red scores may be retro-fitted into the performance data in order to produce separate curves representing the red, yellow, and green candidates. In some embodiments, each of the marginal effects estimates has a 95% confidence interval associated with it that can be displayed in a graph. In other words, the resulting performance curves may be associated with an upper-bound and a lower-bound indicating the range of outcomes (such as a value of the performance metric) in which it is 95% certain that a given employee will achieve at a certain point in time. Based on these performance curves and the 95% confidence intervals, the analysis technique can be used to ensure that a candidate for a job or job type with a green score in the assessment technique reaches a certain level of proficiency *(i.e.,* a certain value of the performance metric) by a specific day of their employment.

In some embodiments of the analysis technique, candidates or job applicants may undergo an existing assessment technique and may submit their responses. A scoring technique may assign the candidates scores of green, yellow, or red, and their data may be included in data structure.

Then, some of the candidates may be hired and they may generate records within the organization or company's human resources management system and the performance management system. Data within these systems may be fed into the data structure and may be merged with the results of the assessment technique based on employee identifiers.

After these data streams are combined, the computer system may identify the assessment content *(i.e.,* the assessment items or questions) that is most predictive of the performance metric (such as customer satisfaction). Assessment items that are not predictive may be dropped from the assessment technique, and assessment items that are highly predictive may be weighted more heavily in the assessment technique and/or the scoring techniques. For example, a question about an individual's attributes and work styles (Are you better described as 'adventurous' or 'sensitive to others,' *i.e.,* do you enjoy trying new things even if they are a little risky or do you do your best to listen to others and not offend them?) may be included in the assessment technique. However, a question about the individual's work and school-related experiences (How many friends do you have that work at this company: 0, 1-2, 3-4, or more than 5 people?) may be excluded from the assessment technique.

Note that the scoring techniques may be regularly or continually updated in order to reflect the optimization or the modification of the assessment technique. Over time, the modified assessment technique may be better able to predict with a higher level of certainty when the green, yellow, and red candidates will achieve a predefined level of performance (such as a value of the performance metric).

In an exemplary embodiment, the random effects estimator is a weighted combination of a fixed effects estimator and a between estimator. Moreover, the analysis technique may use a panel-data technique on panel data. The panel-data technique may: include controls for site, client, and/or temporal effects; by used to model performance and improvement over time; estimate the impact of an individual leaving an organization; use a single day as the observation interval; and test hypotheses and display confidence intervals. Furthermore, the panel data may include time-series or longitudinal data with repeated observations for individuals over time. In some embodiments, the panel data is balanced (with the same number of observations for a group of individuals) and/or unbalanced (with a different number of observations for another group of individuals). Additionally, a short panel may be used (with observations on a large number of individuals over a small time interval, such as 1000 individuals over a month) and/or a long panel (with observations on a small number of individuals over a long time interval, such as ten individuals over a year).

An embodiment of a regression model may be

$$y_{it} = x_{it} \cdot \beta + z_{it} \cdot \gamma + \alpha_i + u_{it},$$

where the observations (i) have values from 1 to *n,* the time *(t)* has values from 1 to T, and $\beta$ and $\gamma$ are regression fit parameters. Note that: $y_{it}$ is a value of a performance metric of an individual at a given time *t* (such as absenteeism, etc.), $x_{it}$ is a value of time-vaiying characteristic of the individual at the given time *t* (such as the day of service, a supervisor, etc.), $z_i$ is a value of time-invariant characteristic of the individual (such as a location, client, trainer, etc.), $\alpha_i$ is an unobserved individual effect (such as race, gender, reliable transportation, etc.), and $u_{it}$ is a value of everything else that impacts performance at the given time *t* (such as call difficulty, an individual having a bad day, etc.),

The between estimator or regression model may be expressed as

$$\overline{y}_i = \overline{x}_i \cdot \beta + z_i \cdot \gamma + \alpha_i + \overline{u}_i,$$

where $\overline{y}_i$ is the average performance of the individual, $\overline{x}_i$ is the average time-varying characteristic of the individual, $\overline{z}_i$ is the average time-invariant characteristic of the individual, $\alpha_i$ is the unobserved individual effect, and $u_i$ is everything else. This estimator averages observations when the regression model is determined.

Similarly, deviations from the group means or fixed effects estimator may be represented by

$$y_{it} - \overline{y}_i = (x_{it} - \overline{x}_i) \cdot \beta + (u_{it} - \overline{u}_i),$$

where $y_{it} - \overline{y}_i$ is the performance deviation from the average, $x_{it} - \overline{x}_i$ is the deviation from the average in the time-varying characteristic, and $u_{it} - \overline{u}_i$ is the deviation from the average in everything else. While this estimator excludes the time-invariant component, it produces estimates that are consistent.

The random effects estimator can combine the regression parameters for the between estimator ($\beta_{BE}$ and $\gamma_{BE}$) with the regression parameter for the fixed effects estimator ($\beta_{FE}$) by inversely weighted variance. Thus, the regression parameter for the random effects estimator ($\delta_{RE}$) may be expressed as

$$\frac{\dfrac{\beta_{FE}}{V_{FE}} + \dfrac{\beta_{BE}}{V_{BE}}}{\dfrac{1}{V_{FE}} + \dfrac{1}{V_{BE}}},$$

where V is the variance for the different estimators. Note that larger variance for a given estimator results in a smaller contribution to the random effects estimator. In principle, the random effects estimator may combine the other two estimators to obtain a better estimate.

Thus, the analysis technique may produce more accurate estimates from smaller samples (*e.g.,* 2-3x smaller than other analysis techniques). It can predict an individual's performance on day 30, 60, 90, 120, etc. Indeed, it offers predictions for a given individual on a given day.

In terms of adjusting the assessments, the determined estimators may be used to generate an estimate of the goodness of fit (such as R squared) that represents how predictive the content in the assessment is. Then, the goodness-of-fit values for all of the content is used to order them (from most to least predictive) and weight them accordingly. Next, the content may be pruned to select the content for use in assessments. For example, content (such as questions) having R squared greater than 0.5 may be included.

FIG. 7, as described above, presents a block diagram illustrating a system 700 that can be used, at least in part, to perform operations in method 1500 (FIGs. 15 and 16). Electronic device 210 as shown in FIG. 7 may be similar to electronic device 1610 in FIG. 16. Additionally, computer 212 as shown in FIG. 7 is similar to computer 1612 in FIG. 16. Accordingly, electronic device 1610 and computer 1612 will be discussed herein with regard to their interaction with network 710 and other computer(s) 712.

During the analysis technique, the user of electronic device1610 may provide, via network 710, the organization data for the organization to computer 1612. In particular, computer 1612 may access, via network 710, the optional external data from additional memory locations in one or more other computer(s) 712. The organization data and/or the optional external data may be regularly or periodically received by computer 1612, such as: hourly, daily, weekly or monthly.

Then, computer 1612 may generate the predictive model that predicts the performance metric based on a subset of the features.

Moreover, computer 1612 may modify the assessment technique based on the predictive model to assess the subset of the features.

Furthermore, computer 1612 may provide, via network 710, and electronic device 1610 may receive the information specifying the subset of the features (as well as the associated marginal predictive power) and/or the modified assessment technique.

Note that information in system 700 may be stored at one or more locations in system 400 *(i.e.,* locally or remotely). Moreover, because this data may be sensitive in nature, it may be encrypted. For example, stored data and/or data communicated via network 710 may be encrypted using symmetric and/or asymmetric encryption techniques (such as public-private key encryption).

FIG. 18 presents a block diagram illustrating a computer system 1800 that performs methods 1500 (FIGs. 15 and 16), which may correspond to or may include computer 1612 (FIGs. 16 and 7). Computer system 1800 includes one or more computer processing units or computer processors 1810, a communication interface 1812, a user interface 1814, and one or more signal lines 1822 coupling these components together. Note that the one or more processors 1810 may support parallel processing and/or multi-threaded operation, the communication interface 1812 may have a persistent communication connection, and the one or more signal lines 1822 may constitute a communication bus. Examples of operations performed by one or more processors 1810 may include: fetch, decode, execute, and writeback. Moreover, the user interface 1814 may include: a display 1816 (such as a touch-sensitive display), a keyboard 1818, and/or a pointer 1820, such as a mouse.

Memory 1824 in computer system 1800 may include volatile memory and/or nonvolatile memory. Some embodiments of memory 1824 may include: *ROM, RAM, EPROM, EEPROM,* flash memory, one or more smart cards, one or more magnetic disc storage devices, and/or one or more optical storage devices. Memory 1824 may store an operating system 1826 that includes procedures (or a set of instructions) for handling various basic system services for performing hardware-dependent tasks. Memory 1824 may also store procedures (or a set of instructions) in a communication module 1828. These communication procedures may be used for communicating with one or more computers and/or computer servers (which are sometimes referred to as 'servers'), including computers and/or servers that are remotely located with respect to computer system 1800.

Memory 1824 may also include multiple program modules (or sets of instructions), including: analysis module 1830 (or a set of instructions), hiring module 1832 (or a set of instructions) and/or encryption module 1834 (or a set of instructions). Note that one or more of these program modules (or sets of instructions) may constitute a computer-program mechanism.

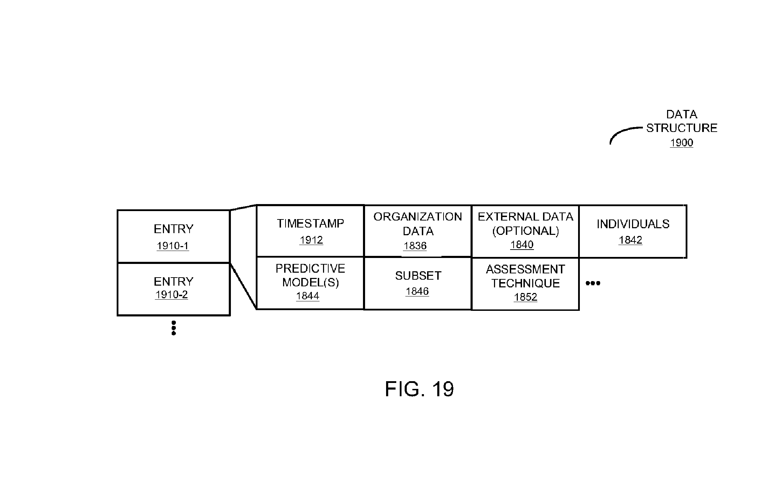

During the analysis technique, analysis module 1830 may receive, via communication interface 1812 and communication module 1828, organization data 1836 for an organization 1838 (which may include the performance metric and the features) and/or optional external data 540. (Alternatively or additionally, analysis module 1830 may access, at one or more memory locations in memory 1824, organization data 1836 and/or optional external data 18.) As noted previously, organization data 1836 and/or optional external data 1840 may be regularly or periodically received by computer system 1800. As shown in FIG. 19, which presents a block diagram illustrating data structure 1900, this information may be stored in a data structure (such as a database or an another type of data structure) for subsequent analysis. In particular, data structure 1900 includes entries 1910, such as organization data 1836 and/or optional external data 1840 at different time stamps (such as timestamp 1912). As described further below, this information may be analyzed for different individuals 1842 to generate one or more predictive models 1844 based on subset 1846 of the features. Furthermore, assessment technique 1852 may be modified based on the one or more predictive models 1844.

Referring back to FIG. 18, analysis module 1830 may generate the one or more predictive models 1844 based on subset 1846 of the features. Then, analysis module 1830 may modify assessment technique 1852. As noted previously, this modification may be based on marginal predictive powers 1848 of the features in subset 1846 and/or drop-off or completion rates 1850 of individuals 1842. Note that these operations may be repeated, as needed, multiple times.

Next, hiring module 1832 (such as human-resources software) provides, via communication module 1828 and communication interface 1812, information specifying subset 1846 and/or assessment technique 1852. As noted previously, the user may use this information to assess candidates for job openings or job types 1854 and/or in making hiring decisions 1856.

Because information used in the analysis technique may be sensitive in nature, in some embodiments at least some of the data stored in memory 1824 and/or at least some of the data communicated using communication module 1828 is encrypted or decrypted using encryption module 1834.

Instructions in the various modules in memory 1824 may be implemented in: a high-level procedural language, an object-oriented programming language, and/or in an assembly or machine language. Such instructions can be implemented upon execution by one or more computer processors. Note that the programming language may be compiled or interpreted, *e.g.,* configurable or configured, to be executed by the one or more processors 1810. (Thus, when one or more of processors 1810 executes one or more of the modules in memory 1824, the one or more processors 1810 may be considered to be 'programmed' to perform the computational technique.)

Although computer system 1800 is illustrated as having a number of discrete items, FIG. 18 is intended to be a functional description of the various features that may be present in computer system 1800 rather than a structural schematic of the embodiments described herein. In some embodiments, some or all of the functionality of computer system 1800 may be implemented in one or more application-specific integrated circuits (*ASICs*) and/or one or more digital signal processors *(DSPs).* In some embodiments, computer system 1800 is implemented using a distributed computing system, such as cloud computing.

Computer system 1800, as well as electronic devices, computers and servers in system 1800, may include one of a variety of devices capable of manipulating computer-readable data or communicating such data between two or more computing systems over a network, including: a personal computer, a laptop computer, a tablet computer, a mainframe computer, a portable electronic device (such as a cellular telephone or *PDA),* a server, and/or a client computer (in a client-server architecture). Moreover, network 710 (FIG. 7) may include: the Internet, World Wide Web (WWW), an intranet, a cellular-telephone network, *LAN, WAN, MAN,* or a combination of networks, or other technology enabling communication between computing systems.

Electronic device 1610 (FIGs. 16 and 7), computer 1612 (FIGs. 16 and 7), system 700 (FIG. 7), computer system 1800 and/or data structure 1900 (FIG. 19) may include fewer components or additional components. Moreover, two or more components may be combined into a single component, and/or a position of one or more components may be changed. In some embodiments, the functionality of electronic device 1610 (FIGs. 16 and 7), computer 1612 (FIGs. 16 and 7), system 700 (FIG. 7), computer system 1800 and/or data structure 1900 (FIG. 19) may be implemented more in hardware and less in software, or less in hardware and more in software, as is known in the art.

The present disclosure also includes computer-based techniques for performing calculations. Some embodiments of the present disclosure relate to a computer-based technique for performing calculations efficiently using a parallel-processing architecture.

Parallel Processing Architecture for Workforce Analytics

The present disclosure also provides a computer system that performs calculations via parallel processing. During operation, the computer system optionally receives organization data associated with individuals and optionally stores the organization at a memory location in a computer-readable memory. Then, the computer system may access, at the memory location, the organization data. This computer system may be used to employ various methods and systems disclosed above and elsewhere herein.

The computer system optionally regularizes the organization data to correct for anomalies (such as differences relative to an expected data format). Moreover, based on changes in the organization data relative to a previous instance of the organization data, the computer system determines a set of calculations to perform. Thus, the computer system may perform a differential analysis of the organization data and the prior instance of the organization data to determine the set of calculations. Note that a given calculation involves organization data for a subset of the individuals, and subsets of the individuals used in different calculations at least partially overlap.

Furthermore, the computer system performs a subset of the set of calculations based on organization data for a given individual to calculate a group of partial results. For example, if the given record is included in 5% of the set of calculations, this subset of the set of calculations may be performed without repeating multiple access operations to the computer-readable memory that stores the organization data for the given individual. Instead, the organization data for the given individual may be accessed only one time in the computer-readable memory.

Next, the computer system repeats the performing for other subsets of the set of calculations based on organization data for other individuals to calculate other groups of partial results. Additionally, the computer system combines the group of partial results and the other groups of partial results to obtain results for the set of calculations.

Note that at least a portion of the set of calculations may be performed in parallel. Alternatively or additionally, at least another portion of the set of calculations may be performed sequentially.

Moreover, the set of calculations may be performed: after a predefined time interval since a previous instance of the set of calculations; as the organization data is received; and/or after an occurrence of a trigger event.

In some embodiments, some or all of the preceding operations performed by the computer system are performed using a cluster of computers at one or more locations. Consequently, the computer system may implement a map-reduce parallelization when computing the set of calculations.

Additionally, in some embodiments the computer system subsequently receives a user-visualization input. In response, the computer system may perform a visualization calculation based on the results for at least some of the set of calculations to generate information that is displayed to the user. Another embodiment provides a method that includes at least some of the operations performed by the computer system. Another embodiment provides a computer-program product for use with the computer system. This computer-program product includes instructions for at least some of the operations performed by the computer system.

Accordingly, a computational technique that facilitates the efficient performance of a set of calculations is described. During this computational technique, the set of calculations is determined based on the differences between current organization data associated with individuals and a previous instance of the organization data. Because a given calculation involves organization data for a subset of the individuals, and the subsets of the individuals used in different calculation at least partially overlap each other, the set of calculations can be divided into subsets of calculations that only involve the organization data of some of the individuals. In particular, a subset of the set of calculations based on organization data for the given individual may be performed to calculate a group of partial results. Then, other subsets of the set of calculations based on organization data for other individuals may be performed to calculate other groups of partial results, and the group of partial results and the other groups of partial results may be combined to obtain results for the set of calculations. Because this approach allows the organization data for the individuals in a computer-readable memory may only to be accessed one time, the computational technique can be performed in significantly less time than existing approaches, which may allow efficient scaling to very large datasets and large numbers of calculations than would otherwise be practical.

Note that the computational technique is not an abstract idea. In particular, the quantitative analysis included in the computational technique is not: a fundamental economic principle, a human activity (the calculations involved in the operations in the computational technique significantly exceed those of a human because of the very large number of calculations in the subsets), and/or a mathematical relationship/formula. Moreover, the computational technique amounts to significantly more than an alleged abstract idea. In particular, the computational technique improves the functioning of a computer or the computer system that executes software and/or implements the computational technique. For example, the computational technique: speeds up the calculations by allowing the data for a given individual to be accessed only one time; reduces memory consumption when performing the calculations by allowing the data for the given individual to be accessed only one time; improves reliability of the calculations (as evidenced by improved results); reduces network latency; improves the user-friendliness of a user interface that displays results of the calculations; and/or improves other performance metrics related to the function of the computer or the computer system.

In the discussion that follows, an employee may include: an individual or a person. Furthermore, an 'organization' should be understood to include: a business, a group of individuals, a government agency and, more generally, a group of one or more individuals who are associated formally or informally. Furthermore, a 'business' should be understood to include: a for-profit corporation, a non-profit corporation, a sole proprietorship, a partnership and, more generally, an organization (which includes one or more individuals) that exchanges goods and/or services with other individuals or organizations.

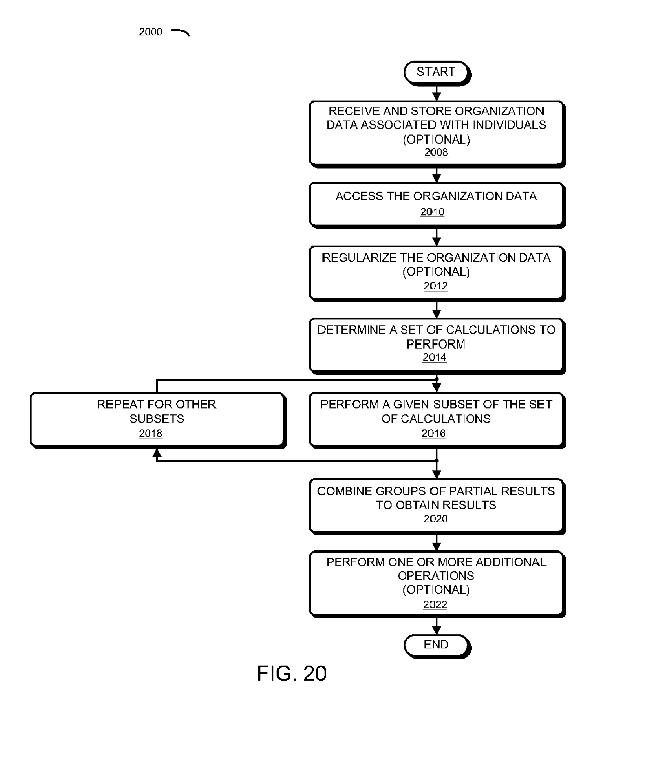

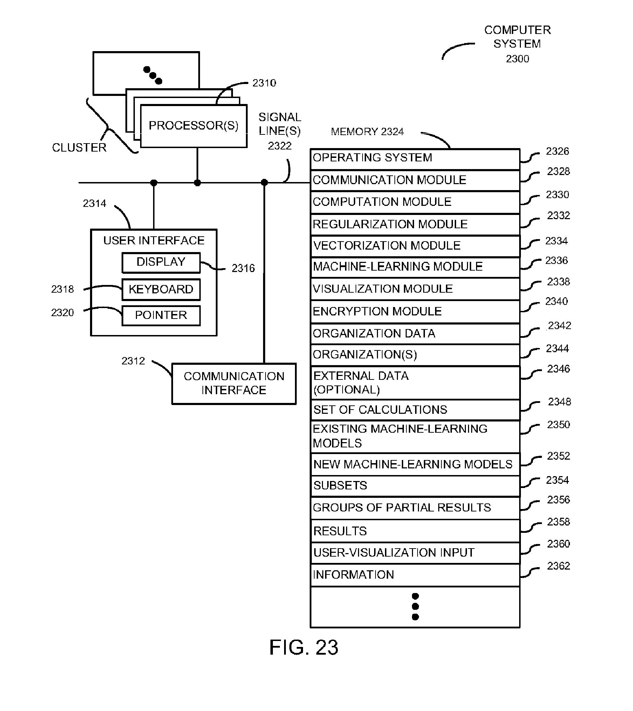

We now describe embodiments of the computational technique. FIG. 20 presents a flow chart illustrating a method 2000 for performing calculations, which may be performed by a computer system (such as computer system 2300 in FIG. 23). During operation, the computer system optionally receives and optionally stores, at a memory location in a computer-readable memory, organization data associated with individuals (operation 2008). Then, the computer system may access, at the memory location, the organization data (operation 2010).

Note that the organization data may include human-resources data and/or operations data for one or more organizations. In particular, the organization data may include: tenure of the employees at an organization (such as the hire dates), job types, functions or job titles in an organization, which clients the employees work with (such as a customer account), regions or locations where the employees work, weather conditions at a work location, how pedestrian friendly a work location is, supervisors or managers of the employees, the number of employees reporting to a given manager (and, more generally, workforce-environmental factor data), satisfaction scores associated with the employees (such as rankings provided by customers, managers or other employees, trainers or coaches, sentiment-analysis data, survey-feedback data, etc.), attendance of the employees (such as how often the employees are sick or late for work), compensation of the employees, skills of the employees (such as a skill set), employee attributes (such as an educational background), colleagues of the employees, interaction among employees of an organization (such as email, telephone calls or text messages among the employees), metadata about the employees (such as educational or work-experience attributes), resumes of the employees, workforce-analytics data, selection-science data (such as intake exams or assessments of prospective employees), survival or retention data (and, more generally, workforce-attrition data), and/or operational information of an organization (such as productivity or revenue data for the employees, e.g., products or services that are fabricated or sold as a function of time, and, more generally, workforce-performance data). Moreover, the computer system may optionally supplement the organization data with external data (such as microeconomic data, macroeconomic data, etc.) from third parties. For example, the optional external data may include: an unemployment rate in a region that includes an organization, hiring trends in the region, retention of employees by competitors of an organization, proximity of the competitors of an organization, compensation offered by the competitors, and/or activity of employees on a social network, e.g., looking at job postings, etc.

Then, the computer system optionally regularizes the organization data (operation 2012) to correct for anomalies (such as differences relative to an expected data format, missing data, normalizing the data so that data having different ranges can be compared, etc.). For example, call-handling time may typically have values around 600 seconds. If the organization data includes values greater than 1500 seconds or less than 100 seconds, these outliers may be discarded. Similarly, if one feature has a range between zero and one, while another has a range between one and a million, the later feature may be normalized to facilitate comparisons and subsequent analysis.

Moreover, based on changes in the organization data relative to a previous instance of the organization data, the computer system determines a set of calculations to perform (operation 2014). Thus, the computer system may perform a differential analysis of the organization data and the prior instance of the organization data to determine the set of calculations. Note that a given calculation involves organization data for a subset of the individuals, and subsets of the individuals used in different calculations at least partially overlap. (Thus, separating the set of calculations into subsets, as described further below, is different from existing dynamic-programming approaches.) In addition, note that the set of calculations may include a wide variety of analysis techniques, including: Kaplan-Meier survival estimator for employee retention, *k*-means clustering analysis, survival analysis, item-response-theory analysis (which is sometimes referred to as 'latent-trait-theory analysis'), regression analysis, classification analysis, predictive models (such as of features that impact employee value or retention), variance decomposition, econometric analysis, correlation analysis, Shapely-Owen decomposition, a supervised-learning technique (such as support vector machines), etc. More generally, the set of calculations may include analysis techniques that involve multiple iterative calculations using many primitive operations.

Furthermore, the computer system performs a given subset of the set of calculations (operation 2016) based on organization data for a given individual to calculate a group of partial results. For example, if the given record is included in 5% of the set of calculations, this subset of the set of calculations may be performed sequentially or concurrently without repeating multiple access operations to the computer-readable memory that stores the organization data for the given individual. Instead, the organization data for the given individual may be accessed only one time in the computer-readable memory.

Next, the computer system repeats the performing for other subsets (operation 2018) of the set of calculations based on organization data for other individuals to calculate other groups of partial results. Additionally, the computer system combines (operation 2020) the group of partial results and the other groups of partial results to obtain results for the set of calculations.

Note that at least a portion of the set of calculations may be performed in parallel. Alternatively or additionally, at least another portion of the set of calculations may be performed sequentially.

Moreover, the set of calculations may be performed: after a predefined time interval since a previous instance of the set of calculations (such as hourly, daily and, more generally, on a scheduled basis); as the organization data is received *(e.g.,* the set of calculations may be performed continuously); and/or after an occurrence of a trigger event (such as when data arrives).

Thus, the computer system may receive regular updates for different types of data in the organization data (such as every minute, hourly, every few hours, daily, etc.).

Additionally, the computer system may optionally perform one or more additional operations (operation 2022). For example, the computer system may subsequently receive a user-visualization input (such as a portion of a graph that the user wants to see). In response, the computer system may perform a visualization calculation (such as a graphical calculation associated with the particular portion of a graph or a rendering calculation based on the user-visualization input) based on the results for at least some of the set of calculations to generate information that is displayed to the user. By using the results for the set of calculations as intermediate and seed information for the subsequent visualization calculation, the computational technique may also allow the visualization calculation to be performed efficiently.

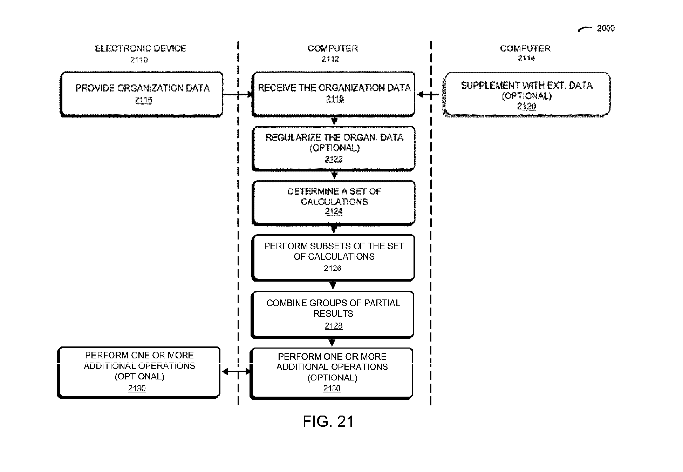

In an exemplary embodiment, the computational technique is implemented using one or more electronic devices (such as a computer, a server or a computer system) and one or more computers (such as a server or a computer system), which communicate through a network, such as a cellular-telephone network and/or the Internet. This is illustrated in FIG. 21, which presents a flow chart illustrating method 2000 (FIG. 20). During the method, electronic device 2110 may provide (operation 2116) and computer 2112 (which may include multiple devices in a computer system) may receive (operation 2118) organization data. Moreover, computer 2112 may supplement the organization data with optional external data (operation 2120) from one or more third-party sources, such as computer 710 *(e.g.,* a server operated by or on behalf of one of the third-party sources).

Then, computer 2112 optionally regularizes the organization data (operation 2122). Furthermore, computer 2112 determines a set of calculations (operation 2124) to perform based on differential analysis *(i.e.,* based on changes in the received organization data relative to the previous instance of the organization data).

Next, computer 2112 performs subsets (operation 2126) of the set of calculations to calculate groups of partial results. Note that the organization data for a given individual may be used in one or more of the subsets of the set of calculations, so this data may only need to be accessed in a computer-readable memory one time. Additionally, computer 2112 combines the groups of partial results (operation 2128) to obtain results for the set of calculations.

In some embodiments, electronic device 2110 and/or computer 2112 optionally perform one or more additional operations (operation 2130). As noted previously, a user of electronic device 2110 may provide a user-visualization input (such as a portion of a graph that the user wants to see). In response, computer 2112 may perform a visualization calculation based on the results for at least some of the set of calculations to generate information that is displayed to the user.

In some embodiments of method 2000 (FIGs. 20 and 21), there are additional or fewer operations. Moreover, the order of the operations may be changed, and/or two or more operations may be combined into a single operation.

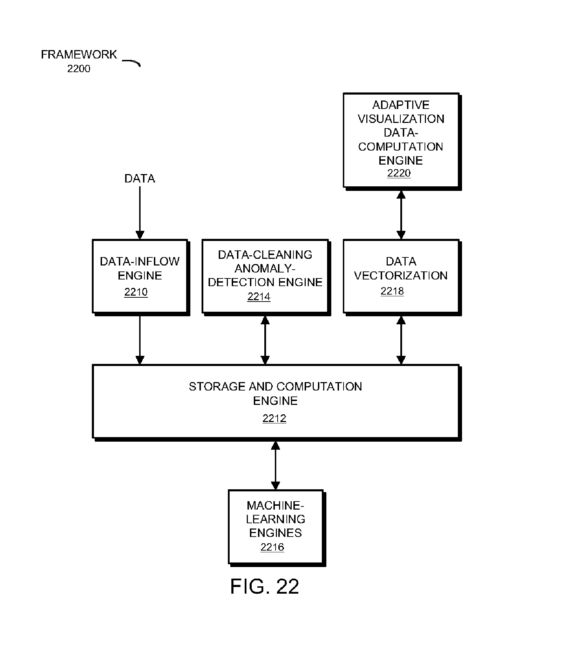

In an exemplary embodiment, some or all of the preceding operations performed by the computer system are performed in parallel using a cluster of computers at one or more locations that implement a map-reduce parallelization when computing the set of calculations. As illustrated in FIG. 22, which presents a block diagram of a framework 2200, this cluster of computers may performs method 2200 (FIGs. 20 and 21). In particular, framework 2200 may perform automated, parallelized, continuous, heterogeneous data ingestion (of different types of data), and performs efficient, scalable and massively parallel calculations of cross-domain machine-learning techniques that span disciplines, such as: *I/O* psychology, selection-science, life-distribution functions, analytical and multidimensional query-based calculations (which is sometimes referred to as 'online analytical processing'), and/or big-data.

Furthermore, framework 2200 may build machine-learning predictive models through a hierarchical and systematic search and discovery of sensitive categorical predictors. This implementation can reduce the computational execution time to achieve online analytical processing and predictive reporting, predictive model building and pattern recognition from a typical duration of years (using existing computation techniques) down to a few minutes on the same massive dataset. Thus, framework 2200 may facilitate: identifying psychometric selection-science artifacts, computing life-distribution functions and hazard-models, performing econometric analysis of the organization data on a large scale, offering adaptive computational visualization support that provides very fluent and rich visualization, and/or determining continuous learning of workforce insights through predictive analytics and pattern-recognition on the latest data flows.

As shown in FIG. 22, data-inflow engine 2210 may receive continuous data flows. These data flows may be provided to dynamically updated big-data store and big-data computation engine (which is henceforth referred to as 'storage and computation engine' 2212). This store and computation engine may provide the received data to a continuous data-cleaning, anomaly-detecting engine 2214 (which is sometimes referred to as a 'regularization engine') that regularizes the organization data. Then, storage and computation engine 2212 may perform a differential analysis of the received organization data relative to a previous instance of the organization data using a causal-dependency and impact-propagation model. In particular, the causal-dependency and impact-propagation model may interact with one or more predetermined machine-learning models (which were generated by machine-learning engines 2216) to determine a set of calculations that need to be performed based on the differential changes in the received organization data. Note that the machine-learning models may include: hazard models or life distribution and related parameter-attrition models, workforce-performance models, attrition-performance pattern-recognition models (such as clustering analysis), psychometricscoring models (which indicate what the computation results mean in terms of workforce performance), and/or workforce risk-assessment models (which may dynamically, as a function of time, determine the risk of attrition).

After determining the set of calculations, framework 2200 may manage a cluster that performs the set of calculations. In particular, framework 2200 may provide the set of calculations to a data-vectorization engine 2218, and then to an adaptive visualization data-computation engine 2220 that includes the cluster of computers. As noted previously, framework 2200 may implement a map-reduce parallelization architecture that allows the cluster to generate partial results for different portions of the received organization data (such as those corresponding to particular individuals), and then to combine these partial results to obtain the desired results for the set of calculations.

In some embodiments, framework 2200 is used to perform all the calculations up to a point. Subsequently, when a user of framework 2200 provides a user-visualization input (such as a desired granularity or scale of a graph), framework 2200 may perform the remaining calculations that are needed so that a display subsystem can render or display the requested information.

We now described aspects of the computer system and its function in more detail. Life distribution and related parameter-attrition models, as well as the machine-learning predictive models, calculated using framework 2200 may use a hierarchical and systematic search and discovery process to identify sensitive categorical predictors. The life distribution model and functions may include: extended Cox-proportional hazard models, Kaplan-Meier survival estimator, Nelson-Aalen hazard estimator, variance, confidence-intervals and/or related statistics. In addition, machine-learning engines 2216 may generate an ensemble of accurate predictive models such as: panel-methods and random-effects regression models, kernel-methods based regression models, decision forests, neural-nets and/or support vector machines. These machine-learning models or estimators may facilitate the analysis of causative factors behind employee-workforce attrition. Furthermore, the estimators may help differentiate between the behaviors of the specific values of a categorical predictor and may provide accurate predictive models.

However, the dataset for these analyses may present themselves as multidimensional cubes of fairly high dimensionality over which one may slide-and-dice to form homogeneous subspaces that lend themselves to a search for sensitive and accurate predictors and estimators. Moreover, the pool of available predictors may also represent a very high-dimensional space of both valued and categorical variables. In order to mitigate the curse of dimensionality, efficient dimensionality reduction (such as clustering into a group of categories, *e.g.,* good, medium and bad) may need to be performed to determine sub-manifolds forming the input feature spaces.

Even when efficient feature-spaces are discovered, there still may be the problem of calculating estimators, such as: the Kaplan-Meier survival estimator, Nelson-Aalen, and predictive regression models like extended Cox-proportional hazard, item-characteristic curves, decision forests, neural-nets and/or support vector machines over a Cartesian product space of features within each cell of the multi-dimensional cube. The inevitable combinatorial explosion of specific learners and estimators may represent an intimidating computational task, which may almost never be attempted in full. Instead, partial subspaces may be considered, and the execution runtimes of these efforts may tend to be days to years.

The computational technique implemented by framework 2200 in the computer system may systematically perform such calculations in their entirely through: efficient use of a massively-parallel cluster-programming approach; the use of shuffling and sorting of intermediary states of calculations that can simultaneously benefit the next steps of millions of calculations; the use of a map-reduce programming approach over unstructured in-memory key-value stores for fast access to massive data stores; and/or a systematic approach that addresses the problem through a hierarchical search, reduction and discovery of accurate predictors and estimators. In practical terms, the computational technique may provide orders-of-magnitude reduction in the overall execution time of the entire set of calculations, from days and years down to a few minutes. This may facilitate a systematic and hierarchical study of computed data to eventually build predictive models that are more accurate, especially in the domain of selection-science and psychometry, thereby facilitating optimal hiring decisions and employee-workforce profitability management.

For example, the computer system may perform an efficient, scalable and massively parallel computation of psychometric-testing quantifier characteristics and post-hire employment metrics in a process of continuous learning that deeply integrates continuous, big-data streams into a computational-visualization and insight generation fabric. In particular, the field of selection-science often employs psychometric techniques (such as classical testing theory and item-response theory) to quantify and measure categories of applicant traits germane to a job, which may be predictive of performance and survival or retention. A central concept in this field is that of an 'item' and its applicant response, for which various analysis techniques exist, such as: item-response characteristics curves, bi-serial correlation, etc. Similarly, the post-hire employment workforce may provide a rich set of metrics that may require deep analysis for predictive modeling, and which can also be studied for latent traits through item-response theory.

However, when large datasets need to be represented in a high-dimensionality multidimensional cube for a multi-dimensional query and the number of machine-learning analyses that the item-responses participate in, unique problems of scale arise. For example, there may be a very large number of the combinatorial possibilities along which the various analyses may be performed. The computer system may implement a large class of learners (such as machine-learning engines 2216) that together participate in the predictive ensemble. These learners may facilitate the handling of continuous datasets from diverse concurrent applicants taking assessments in real-time. Moreover, these learners may facilitate continuous learning as the underlying dataset mutates and grows, thereby ensuring that the mathematical calculations are efficient and work at scale and within the time-constraints (such as, every 6 hours). The computer system may also provide specific summary-result flows into real-time visualizations that may continuously adapt to new learning.

The efficient, fault-tolerant, scalable and high-performance platform or framework (such as framework 2200) in the computer system may address these changes and may provide: orders-of-magnitude reduction in the overall execution time of the entire set of item-response calculations (from days and years down to a few minutes); and/or an un-paralleled and rich real-time visualization framework of machine-learning models, predictions and raw-applicant selection data over the comprehensive big-data repository.

In another example, the computer system may facilitate scalable life-distributions and workforce performance modeling from selection-science artifacts and workforce factors. In particular, the computer system may determine life-distributions and complex hazard models using the psychometric selection-science predictors (specifically the items, and their hierarchical representation as scales, performance factors, etc.). Similarly, a workforce performance-specific regression model may be developed based on the preceding psychometric data. In some embodiments, game-theoretical computations (such as Shapley-Owen decomposition) are included in these analyses. Because these models are computationally expensive, using an existing computational technique it may take days or weeks for each model to build from raw datasets. Compounding this is the fact that tens of thousands of such intensive and detailed models may need to be built. The massively parallel approach described here, however, performs these calculations needed to build tens of thousands of models successfully in a matter of a few hours.

As noted previously, the computer system may also facilitate adaptive computational visualization. It is often the nature of this specific field of enquiry to perform various ad-hoc graphical comparisons and operations. Given the combinatorial massive number of data slices needing such visualization, the computer system may therefore provide an innovative adaptive computational visualization technique. In particular, massive sets of visualization computation data may be pre-computed and stored in a hierarchical way (such as according to regions, subregions, locations, etc.) so that they are associated with various data-slices of the multidimensional analysis. Moreover, these calculations may be performed in specific hierarchical ways so that the partial results of one calculation feeds into the calculation of another result. In other words, there may be a specific way to collectively and collaboratively compute all the results at one go (such as by using the subsets of calculations). This capability may be achieved while still performing a massively parallel computation of at least some if not all of these results.

Note that the calculations of the graphical display from the underlying visualization data may be deferred until the calculations on rendering in such a way as to make the visualizations adaptive, thereby allowing users to perform exploratory analysis. For example, when the user provides a scale for a particular graph (and, more generally, the user-visualization input), the calculation results may be coalesced to allow the requested graph to be rendered.

In some embodiments, the computer system provides insight extraction for big-data streams. For example, as the continuous influx of heterogeneous organization data flows into framework 2200 continues, the computer system may continuously ingest, clean, and vectorize the organization data. Thereafter, the computer system may use a causal-dependency and impact-propagation model of the existing organization data (such as the differential analysis) to compute the minimal incremental set of calculations needed to update the computed results, such as: the various life-distribution models, selection-science models, random-effect regression models, item-response-theory models, employment attrition and risk prediction models and/or various other machine-learning models. This capability may provide a very powerful computer system that continually displays deep predictive and pattern-recognition insights based on the latest data flows.

In an exemplary embodiment, there are 5000 predictor types in the organization data, which may each have, on average, 50-100 values. For example, the predictor types may include dimensional information, such as: a hire date, a termination date, a location, a region, a subregion, a client, a department, a group, tenure (equal to the difference of the termination date and the hire date), assessment data, customer satisfaction ratings (*e.g.,* a timestamp, an average value, and a number of ratings included in the average value), textural description feedback (*e.g.,* sentiment analysis), sales performance, average handling time, etc. In addition, permutations and combinations of the 50,000 predictor-values may result in 50 million models (with different subsets or orderings of the predictor types and values) that may need to be computed. Existing computational approaches may take 1 minute per model. Moreover, 60-100 different types of models may be generated daily, resulting in some 75 million hours of runtime daily. Consequently, in the absence of the disclosed computational technique, the overall runtime may be prohibitively long.

Framework 2200 in the computer system described here may allow significant runtime reductions, from days down to minutes. In particular, using differential analysis the computer system can determine the set of calculations needed based on a recent update to the dataset. Then, the computer system may reduce memory accesses by performing subsets of the set of calculations that include the organization data in the dataset for particular individuals. For example, a given subset may include all the calculations that include the termination date for an employee. These partial results may be combined with the results from other subsets of the set of calculations to obtain the desired results for the set of calculations. Moreover, some or all of the operations in this computational technique may be performed in parallel, *e.g.,* by using a cluster of computers. The computer system may implement a map-reduction technique that manages execution of portions of the computational technique in the cluster and that combines partial results into the results (thus, partial results using the organization date for a given individual may be combined by framework 2200).

In some embodiments, the cluster may include 30 nodes that each run 100 map-reduction engines. Alternatively, the cluster may include 12 nodes, which each include 2 processors with a total of 12 cores. Thus, the cluster may perform the set of calculations using a total of 144 cores, as opposed to the approximately 3 million cores (75 million hours in one day) that would be needed to perform the set of calculations using existing computational techniques in the same total runtime (a reduction of more than 20,000).

**FIG. 7,** as described above, presents a block diagram illustrating a system 700 that can be used, at least in part, to perform operations in method 2000 (FIGs. 20 and 21). Electronic device 210 as shown in FIG. 7 is similar to electronic device 2110 in FIG. 21. Additionally, computer 212 as shown in FIG. 7 is similar to computer 2112 in FIG. 21. Accordingly, electronic device 2110 and computer 2112 will be discussed herein with regard to their interaction with network 710 and other computer(s) 712.

During the computational technique, the user of an electronic device 2110 may provide, via network 710, the organization data for an organization to computer 2112. In particular, computer 2112 may access, via network 710, optional external data from additional memory locations in one or more other computer(s), such as computer 714. The organization data and/or the optional external data may be regularly or periodically received by computer 2112, such as: hourly, daily or weekly.

Then, computer 2112 may optionally regularize the organization data. Furthermore, computer 2112 may determine a set of calculations to perform based on differential analysis (*i.e.,* based on changes in the received organization data relative to the previous instance of the organization data).

Next, computer 2112 performs subsets of the set of calculations to calculate groups of partial results. Additionally, computer 2112 combines the groups of partial results to obtain results for the set of calculations.

In some embodiments, a user of electronic device 2110 may provide, via network 710, a user-visualization input (such as a scale for a graph that the user wants to see) to computer 2112. In response, computer 2112 may perform a visualization calculation based on the results for at least some of the set of calculations to generate information. This information is provided, via network 710, to electronic device 2110, which displays the requested graph on a display in electronic device 2110 for the user based on the information.

Note that information in system 700 may be stored at one or more locations in system 700 (*i.e.,* locally or remotely). Moreover, because this data may be sensitive in nature, it may be encrypted. For example, stored data and/or data communicated via network 710 may be encrypted using symmetric and/or asymmetric encryption techniques (such as public-private key encryption).

FIG. 23 presents a block diagram illustrating a computer system 2300 that performs method 2000 (FIGs. 20 and 21), which may correspond to or may include computer 2110 (FIGs. 21 and 7) and/or framework 2200 (FIG. 22). Computer system 2300 includes one or more computer processing units or computer processors 2310, a communication interface 2312, a user interface 2314, and one or more signal lines 2322 coupling these components together. Note that the one or more processors 2310 may support parallel processing and/or multi-threaded operation, the communication interface 2312 may have a persistent communication connection, and the one or more signal lines 2322 may constitute a communication bus. Examples of operations performed by one or more processors 2310 may include: fetch, decode, execute, and writeback. Moreover, the user interface 2314 may include: a display 2316 (such as a touch-sensitive display), a keyboard 2318, and/or a pointer 2320, such as a mouse.

Memory 2324 in computer system 2300 may include volatile memory and/or nonvolatile memory. Some embodiments of memory 2324 may include: *ROM, RAM, EPROM, EEPROM,* flash memory, one or more smart cards, one or more magnetic disc storage devices, and/or one or more optical storage devices. Memory 2324 may store an operating system 2326 that includes procedures (or a set of instructions) for handling various basic system services for performing hardware-dependent tasks. Memory 2324 may also store procedures (or a set of instructions) in a communication module 2328. These communication procedures may be used for communicating with one or more computers and/or computer servers (which are sometimes referred to as 'servers'), including computers and/or servers that are remotely located with respect to computer system 2300.

Memory 2324 may also include multiple program modules (or sets of instructions), including: computation module 2330 (or a set of instructions), regularization module 2332 (or a set of instructions), vectorization module 2334 (or a set of instructions), machine-learning module 2336 (or a set of instructions), visualization module 2338 (or a set of instructions), and/or encryption module 2340 (or a set of instructions). Note that one or more of these program modules (or sets of instructions) may constitute a computer-program mechanism.

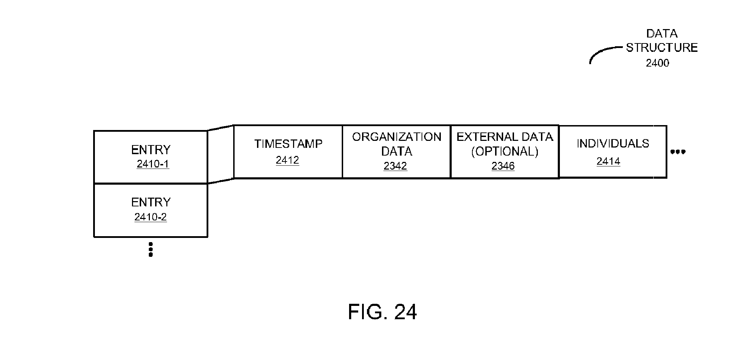

During the computational technique, computation module 2330 may receive, via communication interface 2312 and communication module 2328, organization data 2342 for one or more organizations 2344 and/or optional external data 2346. (Alternatively or additionally, computation module 2332 may access, at one or more memory locations in memory 2324, organization data 2342 and/or optional external data 2346.) As noted previously, organization data 2342 and/or optional external data 2346 may be regularly or periodically received by computer system 2300. As shown in FIG. 24, which presents a block diagram illustrating data structure 2400, this information may be stored in a data structure (such as a database or an another type of data structure) for subsequent analysis. In particular, data structure 2400 includes entries 2410, such as organization data 2342 and/or optional external data 2346 at different time stamps (such as timestamp 2412) for individuals 2414.

Referring back to FIG. 23, regularization module 2332 may optionally regularize organization data 2342. Furthermore, computation module 2330 may determine a set of calculations 2348 to perform based on differential analysis *(i.e.,* based on changes in organization data 2342 relative to a previous instance of the organization data). This set of calculations may involve using one or more existing machine-learning models 2350, which were determined using machine-learning module 2336. Alternatively, set of calculations 2348 may involve determining new machine-learning models 2352 using machine-learning module 2336.

Next, vectorization module 2334 may divide set of calculations 2348 into subsets 2354 based on different individuals that are associated with organization data 2342. In particular, subsets 2354 may be selected so that organization data 2342 for a given individual in memory 2324 may only need to be accessed one time, thereby significantly reducing the runtime. Subsequently, computation module 2330 may perform subsets 2354 using processors 2310 (such as multiple nodes in a cluster) to generate groups of partial results 2356. Furthermore, computation module 2330 may combine the groups of partial results 2356 to obtain results 2358 for set of calculations 2348.

Additionally, computation module 2330 may receive, via communication interface 2312 and communication module 2328, user-visualization input 2360. In response, visualization module 2338 may perform a visualization calculation based on results 2358 for at least some of set of calculations 2348 to generate information 2362. This information may be provided by computation module 2330 to the user's electronic device, via communication module 2328 communication interface 2312, for presentation to the user.

Because information used in the computational technique may be sensitive in nature, in some embodiments at least some of the data stored in memory 2324 and/or at least some of the data communicated using communication module 2328 is encrypted or decrypted using encryption module 2340.

Instructions in the various modules in memory 2324 may be implemented in: a high-level procedural language, an object-oriented programming language, and/or in an assembly or machine language. Such instructions can be implemented upon execution by one or more computer processors. Note that the programming language may be compiled or interpreted, *e.g.,* configurable or configured, to be executed by the one or more processors 2310. (Thus, when one or more of processors 2310 executes one or more of the modules in memory 2324, the one or more processors 2310 may be considered to be 'programmed' to perform the computational technique.)

Although computer system 2300 is illustrated as having a number of discrete items, FIG. 23 is intended to be a functional description of the various features that may be present in computer system 2300 rather than a structural schematic of the embodiments described herein. In some embodiments, some or all of the functionality of computer system 2300 may be implemented in one or more application-specific integrated circuits (*ASICs*) and/or one or more digital signal processors (*DSPs*). In some embodiments, computer system 2300 is implemented using a distributed computing system, such as cloud computing.

Computer system 2300, as well as electronic devices, computers and servers in system 2300, may include one of a variety of devices capable of manipulating computer-readable data or communicating such data between two or more computing systems over a network, including: a personal computer, a laptop computer, a tablet computer, a mainframe computer, a portable electronic device (such as a cellular telephone or *PDA*), a server, and/or a client computer (in a client-server architecture). Moreover, network 710 (FIG. 7) may include: the Internet, World Wide Web (WWW), an intranet, a cellular-telephone network, *LAN, WAN, MAN,* or a combination of networks, or other technology enabling communication between computing systems.

Electronic device 2110 (FIGs. 21 and 7), computer 2112 (FIGs. 21 and 7), framework 2200 (FIG. 22), system 700 (FIG. 7), computer system 2300 and/or data structure 2400 (FIG. 24) may include fewer components or additional components. Moreover, two or more components may be combined into a single component, and/or a position of one or more components may be changed. In some embodiments, the functionality of electronic device 2110 (FIGs. 21 and 7), computer 2112 (FIGs. 21 and 7), framework 2200 (FIG. 22), system 700 (FIG. 7), computer system 2300 and/or data structure 2400 (FIG. 24) may be implemented more in hardware and less in software, or less in hardware and more in software, as is known in the art.

While the preceding embodiments illustrated the use of the analysis technique for employees, in other embodiments the analysis technique is used with individuals who are not paid by the organization. Thus, the individuals may include volunteers or individuals whose compensation is other than salary. For example, one of the individuals may receive compensation in the form of services, free products or via barter.

Furthermore, while regression models and variance decomposition were used as illustrative examples in the analysis technique, a wide variety of supervised and/or unsupervised learning techniques may be used in conjunction with the analysis technique. For example, linear and/or nonlinear predictive models may be determined from the organization data and/or the optional external data using: support vector machines, neural networks, classification and regression trees, Bayesian statistics, regression analysis, logistic regression, and/or another machine-learning technique.

In the preceding description, we refer to 'some embodiments.' Note that 'some embodiments' describes a subset of all of the possible embodiments, but does not always specify the same subset of embodiments.

Aspects of the subject matter described herein are set out in the following numbered clauses:

1. A computer-implemented method for analyzing employee value and retention risk, the method comprising:

accessing, at a memory location, organization data for an organization;
using a computer processor that is coupled to the memory location and programmed to analyze the employee value and the retention risk, calculating a performance metric for an employee based on the organization data;
using the organization data, determining the retention risk for the employee;
providing the calculated performance metric and the determined retention risk; and
providing a retention suggestion and an associated cost-benefit analysis for the employee, wherein the cost-benefit analysis includes an expense associated with the retention suggestion and an estimated incremental retention time in response to the retention suggestion.

2. The method of clause 1, wherein the organization data includes one of: tenure of the employee at the organization, compensation of the employee, satisfaction scores associated with the employee, skills of the employee, a supervisor of the employee, a colleague of the employee, interaction among employees of the organization, and operations information of the organization.

3. The method of clause 1, wherein the performance metric includes one of: revenue associated with the employee, productivity of the employee, overtime worked by the employee, adherence of the employee to a schedule, attendance of the employee, a number of employees that interact with the employee, activity of the employee, and satisfaction scores associated with the employee.

4. The method of clause 1, wherein at least one of calculating the performance metric and determining the retention risk involves variance decomposition to select factors in the organization data, determine the impact of the factors, and to cluster the factors in regression models.

5. The method of clause 1, wherein the calculating and determining operations are repeated for multiple employees in the organization; and
wherein the calculated performance metrics and the determined retention risks for subsets of the employees are aggregated and provided.

6. The method of clause 5, wherein the aggregated employees correspond to one of: a group in the organization, a supervisor, a location, employees having an attribute, a time interval, and employees associated with a customer account.

7. The method of clause 1, wherein the method further comprises accessing, at another memory location, external data for at least one other organization; and
wherein the determining of the retention risk is based on the external data.

8. The method of clause 7, wherein the external data includes one of: an unemployment rate in a region that includes the organization, hiring trends in the region, retention of employees by competitors of the organization, proximity of the competitors of the organization, compensation offered by the competitors, and activity of the employee on a social network.

9. The method of clause 1, wherein the calculated performance metric and the determined retention risk are evaluated for a set of time intervals; and
wherein the calculated performance metric and the determined retention risk correspond to variation in the set of time intervals.

10. The method of clause 1, wherein the calculated performance metric is relative to a mean performance metric of multiple employees of the organization.

11. A computer-program product for use in conjunction with a computer system, the computer-program product comprising a non-transitory computer-readable storage medium and a computer-program mechanism embedded therein to analyze employee value and retention risk, the computer-program mechanism including:

    instructions for accessing, at a memory location in the computer system, organization data for an organization;
    instructions for calculating a performance metric for an employee based on the organization data, wherein the calculation uses a computer processor in the computer system that is coupled to the memory location and programmed to analyze the employee value and the retention risk;
    instructions for determining, using the organization data, the retention risk for the employee;
    instructions for providing the calculated performance metric and the determined retention risk; and
    instructions for providing a retention suggestion and an associated cost-benefit analysis for the employee, wherein the cost-benefit analysis includes an expense associated with the retention suggestion and an estimated incremental retention time in response to the retention suggestion.

12. The computer-program product of clause 11, wherein the calculating and determining operations are repeated for multiple employees in the organization; and
wherein the calculated performance metrics and the determined retention risks for subsets of the employees are aggregated and provided.

13. The computer-program product of clause 12, wherein the aggregated employees correspond to one of: a group in the organization, a supervisor, a location, employees having an attribute, a time interval, and employees associated with a customer account.

14. The computer-program product of clause 11, wherein the computer-program mechanism further includes instructions for accessing, at another memory location in the computer system, external data for at least one other organization; and
wherein the determining of the retention risk is based on the external data.

15. The computer-program product of clause 14, wherein the external data includes one of:

    an unemployment rate in a region that includes the organization, hiring trends in the region, retention of employees by competitors of the organization, proximity of the competitors of the organization, compensation offered by the competitors, and activity of the employee on a social network.

16. The computer-program product of clause 11, wherein the calculated performance metric and the determined retention risk are evaluated for a set of time intervals; and
wherein the calculated performance metric and the determined retention risk correspond to variation in the set of time intervals.

17. The computer-program product of clause 11, wherein the calculated performance metric is relative to a mean performance metric of multiple employees of the organization.

18. A computer system, comprising:

    a processor;
    memory; and
    a program module, wherein the program module is stored in the memory and configurable to be executed by the processor to analyze employee value and retention risk, the program module including:

        instructions for accessing, at a memory location in the memory, organization data for an organization;
        instructions for calculating a performance metric for an employee based on the organization data, wherein the calculation uses the processor that is coupled to the memory location and programmed to analyze the employee value and the retention risk;
        instructions for determining, using the organization data, the retention risk for the employee;
        instructions for providing the calculated performance metric and the determined retention risk; and
        instructions for providing a retention suggestion and an associated cost-benefit analysis for the employee, wherein the cost-benefit analysis includes an expense associated with the retention suggestion and an estimated incremental retention time in response to the retention suggestion.

19. The computer system of clause 18, wherein the calculating and determining operations are repeated for multiple employees in the organization; and
wherein the calculated performance metrics and the determined retention risks for subsets of the employees are aggregated and provided

20. The computer system of clause 18, wherein the program module further includes instructions for accessing, at another memory location in the memory, external data for at least one other organization; and
wherein the determining of the retention risk is based on the external data.

21. A computer-implemented method for identifying predictors for retention, the method comprising:

accessing, at a memory location, retention data for individuals, wherein the retention data includes, as a function of time, retention probabilities that the individuals remain in functions in an organization and a set of potential predictors for the retention probabilities;

generating Kaplan-Meier estimator curves based on the retention data and the set of potential predictors;

using a computer processor that is coupled to the memory location and programmed to identify the predictors for retention, performing clustering analysis on the Kaplan-Meier estimator curves to determine natural groupings of the Kaplan-Meier estimator curves for the set of potential predictors; and

identifying the predictors for retention of the individuals based on the determined natural groupings.

22. The method of clause 21, wherein the clustering analysis involves a modified k-means clustering based on an error metric that is other than Euclidean distance.

23. The method of clause 22, wherein the error metric includes integrated area between a given pair of the Kaplan-Meier estimator curves.

24. The method of clause 22, wherein the clustering analysis involves a range of k values; wherein the clustering analysis is repeated N times, where N is an integer; and

wherein the determined natural groups have a k value with minimum values of the error metric over the range of k values.

25. The method of clause 22, further comprising receiving a user-specified k value prior to performing the clustering analysis.

26. The method of clause 21, wherein the clustering analysis involves one of: expectation maximization clustering and density clustering.

27. The method of clause 21, wherein the identified predictors are associated with at least natural groupings having a centroid separation exceeding a threshold value.

28. The method of clause 21, further comprising determining remedial action to increase the retention probabilities based on the identified predictors for retention.

29. A computer-program product for use in conjunction with a computer system, the computer-program product comprising a non-transitory computer-readable storage medium and a computer-program mechanism embedded therein to identify predictors for retention, the computer-program mechanism including:

instructions for accessing, at a memory location in the computer system, retention data for individuals, wherein the retention data includes, as a function of time, retention probabilities that the individuals remain in functions in an organization and a set of potential predictors for the retention probabilities;

instructions for generate Kaplan-Meier estimator curves based on the retention data and the set of potential predictors;

instructions for performing clustering analysis on the Kaplan-Meier estimator curves to determine natural groupings of the Kaplan-Meier estimator curves for the set of potential predictors, wherein the clustering analysis uses a computer processor in the computer system that is coupled to the memory location and programmed to identify the predictors for retention; and

instructions for identifying the predictors for retention of the individuals based on the determined natural groupings.

30. The computer-program product of clause 29, wherein the clustering analysis involves a modified k-means clustering based on an error metric that is other than Euclidean distance.

31. The computer-program product of clause 30, wherein the error metric includes integrated area between a given pair of the Kaplan-Meier estimator curves.

32. The computer-program product of clause 30, wherein the clustering analysis involves a range of k values;

wherein the clustering analysis is repeated N times, where N is an integer; and

wherein the determined natural groups have a k value with minimum values of the error metric over the range of k values.

33. The computer-program product of clause 30, wherein the computer-program mechanism further comprises instructions for receiving a user-specified k value prior to performing the clustering analysis.

34. The computer-program product of clause 29, wherein the identified predictors are associated with at least natural groupings having a centroid separation exceeding a threshold value.

35. The computer-program product of clause 29, wherein the computer-program mechanism further comprises instructions for determining remedial action to increase the retention probabilities based on the identified predictors for retention.

36. A computer system, comprising:

a processor;
memory; and
a program module, wherein the program module is stored in the memory and configurable to be executed by the processor to identify predictors for retention, the program module including:

instructions for accessing, at a memory location in the memory, retention data for individuals, wherein the retention data includes, as a function of time, retention probabilities that the individuals remain in functions in an organization and a set of potential predictors for the retention probabilities; instructions for generate Kaplan-Meier estimator curves based on the retention data and the set of potential predictors; instructions for performing clustering analysis on the Kaplan-Meier estimator curves to determine natural groupings of the Kaplan-Meier estimator curves for the set of potential predictors, wherein the clustering analysis uses the processor that is coupled to the memory location and programmed to identify the predictors for retention; and instructions for identifying the predictors for retention of the individuals based on the determined natural groupings.

37. The computer system of clause 36, wherein the clustering analysis involves a modified k-means clustering based on an error metric that is other than Euclidean distance.

38. The computer system of clause 37, wherein the clustering analysis involves a range of k values; wherein the clustering analysis is repeated N times, where N is an integer; and wherein the determined natural groups have a k value with minimum values of the error metric over the range of k values.

39. The computer system of clause 37, wherein the program module further comprises instructions for receiving a user-specified k value prior to performing the clustering analysis.

40. The computer system of clause 36, wherein the program module further comprises instructions for determining remedial action to increase the retention probabilities based on the identified predictors for retention.

41. A computer-implemented method for modifying an assessment technique, the method comprising:

accessing, at a memory location, organization data for an organization and information specifying the assessment technique, wherein the organization data includes time samples of a performance metric for individuals in the organization and features that are assessed using the assessment technique;

using a computer processor that is coupled to the memory location and programmed to modify the assessment technique, generating a predictive model that predicts the performance metric based on a subset of the features; and

modifying the assessment technique based on the predictive model to assess the subset of the features.

42. The method of clause 41, wherein the generating involves a panel method that accounts for correlations in the time samples.

43. The method of clause 41, wherein the predictive model includes a time-variant component based on averages of the performance metric and the subset of the features and a time-invariant component based on deviations from the averages of the performance metric and the subset of the features, and wherein weights of the time-variant component and the time-invariant component in the predictive model are inversely related to variances of the time-variant component and the time-invariant component.

44. The method of clause 41, wherein the performance metric includes one of: customer satisfaction, average time to handle a customer, and adherence to a schedule.

45. The method of clause 41, wherein the features include one of: abilities of the individuals, characteristics of one or more positions, an environment of the organization that includes the one or more positions, experience of the individuals, training of the individuals, and relationships among the individuals and with supervisors.

46. The method of clause 41, wherein the modifying is based on drop-off of individuals during the assessment technique as a function of a length of the assessment technique.

47. The method of clause 41, wherein the modifying is based on marginal predictive power of the factors in the subset of the factors.

48. A computer-program product for use in conjunction with a computer system, the computer-program product comprising a non-transitory computer-readable storage medium and a computer-program mechanism embedded therein to modify an assessment technique, the computer-program mechanism including:

instructions for accessing, at a memory location in the computer system, organization data for an organization and information specifying the assessment technique, wherein the organization data includes time samples of a performance metric for individuals in the organization and features that are assessed using the assessment technique;

instructions for generating a predictive model that predicts the performance metric based on a subset of the features, wherein the generating uses a computer processor in the computer system that is coupled to the memory location and programmed to modify the assessment technique; and

instructions for modifying the assessment technique based on the predictive model to assess the subset of the features.

49. The computer-program product of clause 48, wherein the generating involves a panel method that accounts for correlations in the time samples.

50. The computer-program product of clause 48, wherein the predictive model includes a time-variant component based on averages of the performance metric and the subset of the features and a time-invariant component based on deviations from the averages of the performance metric and the subset of the features, and wherein weights of the time-variant component and the time-invariant component in the predictive model are inversely related to variances of the time-variant component and the time-invariant component.

51. The computer-program product of clause 48, wherein the performance metric includes one of: customer satisfaction, average time to handle a customer, and adherence to a schedule.

52. The computer-program product of clause 48, wherein the features include one of: abilities of the individuals, characteristics of one or more positions, an environment of the organization that includes the one or more positions, experience of the individuals, training of the individuals, and relationships among the individuals and with supervisors.

53. The computer-program product of clause 48, wherein the modifying is based on drop-off of individuals during the assessment technique as a function of a length of the assessment technique.

54. The computer-program product of clause 48, wherein the modifying is based on marginal predictive power of the factors in the subset of the factors.

55. A computer system, comprising:

a processor;
memory; and
a program module, wherein the program module is stored in the memory and configurable to be executed by the processor to modify an assessment technique, the program module including:

instructions for accessing, at a memory location in the memory, organization data for an organization and information specifying the assessment technique, wherein the organization data includes time samples of a performance metric for individuals in the organization and features that are assessed using the assessment technique;
instructions for generating a predictive model that predicts the performance metric based on a subset of the features, wherein the generating uses the processor that is coupled to the memory location and programmed to modify the assessment technique; and
instructions for modifying the assessment technique based on the predictive model to assess the subset of the features.

56. The computer system of clause 55, wherein the predictive model includes a time-variant component based on averages of the performance metric and the subset of the features and a time-invariant component based on deviations from the averages of the performance metric and the subset of the features, and wherein weights of the time-variant component and the time-invariant component in the predictive model are inversely related to variances of the time-variant component and the time-invariant component.

57. The computer system of clause 55, wherein the performance metric includes one of:

customer satisfaction, average time to handle a customer, and adherence to a schedule.

58. The computer system of clause 55, wherein the features include one of: abilities of the individuals, characteristics of one or more positions, an environment of the organization that includes the one or more positions, experience of the individuals, training of the individuals, and relationships among the individuals and with supervisors.

59. The computer system of clause 55, wherein the modifying is based on drop-off of individuals during the assessment technique as a function of a length of the assessment technique.

60. The computer system of clause 55, wherein the modifying is based on marginal predictive power of the factors in the subset of the factors.

61. A computer-implemented method for performing calculations, the method comprising:

accessing, at a memory location, organization data associated with individuals;
using a computer processor that is coupled to the memory location and programmed to perform the calculations, determining a set of calculations to perform based on changes in the organization data relative to a previous instance of the organization data, wherein a given calculation involves organization data for a subset of the individuals, and subsets of the individuals used in different calculations at least partially overlap;
performing a subset of the set of calculations based on organization data for a given individual to calculate a group of partial results;
repeating the performing for other subsets of the set of calculations based on organization data for other individuals to calculate other groups of partial results; and

combining the group of partial results and the other groups of partial results to obtain results for the set of calculations.

62. The method of clause 61, wherein, prior to determining the set of calculations, the method comprises regularizing the organization data to correct anomalies relative to a predefined format.

63. The method of clause 61, wherein, prior to accessing the organization data, the method comprises receiving the organization data and storing the organization data at the memory location.

64. The method of clause 61, wherein at least a portion of the set of calculations is performed in parallel.

65. The method of clause 61, wherein at least a portion of the set of calculations is performed sequentially.

66. The method of clause 61, wherein performing the subset of the set of calculations based on organization data for the given individual involves only accessing one time the organization data for the given individual at the memory location.

67. The method of clause 61, wherein the set of calculations are performed according to one of: after a predefined time interval since a previous instance of the set of calculations; as the organization data is received; and after an occurrence of a trigger event.

68. A computer-program product for use in conjunction with a computer system, the computer-program product comprising a non-transitory computer-readable storage medium and a computer-program mechanism embedded therein to perform calculations, the computer-program mechanism including:

instructions for accessing, at a memory location in a memory in the computer system, organization data associated with individuals; instructions for determining a set of calculations to perform based on changes in the organization data relative to a previous instance of the organization data, wherein the determining uses a computer processor in the computer system that is coupled to the memory location and programmed to perform the calculations; and wherein a given calculation involves organization data for a subset of the individuals, and subsets of the individuals used in different calculations at least partially overlap; instructions for performing a subset of the set of calculations based on organization data for a given individual to calculate a group of partial results; instructions for repeating the performing for other subsets of the set of calculations based on organization data for other individuals to calculate other groups of partial results; and instructions for combining the group of partial results and the other groups of partial results to obtain results for the set of calculations.

69. The computer-program product of clause 68, wherein the computer-program mechanism includes, prior to the instructions for determining the set of calculations, instructions for regularizing the organization data to correct anomalies relative to a predefined format.

70. The computer-program product of clause 68, wherein the computer-program mechanism includes, prior to the instructions for accessing the organization data, instructions for receiving the organization data and instructions for storing the organization data at the memory location.

71. The computer-program product of clause 68, wherein at least a portion of the set of calculations is performed in parallel.

72. The computer-program product of clause 68, wherein at least a portion of the set of calculations is performed sequentially.

73. The computer-program product of clause 68, wherein performing the subset of the set of calculations based on organization data for the given individual involves only accessing one time the organization data for the given individual at the memory location.

74. The computer-program product of clause 68, wherein the set of calculations are performed according to one of: after a predefined time interval since a previous instance of the set of calculations; as the organization data is received; and after an occurrence of a trigger event.

75. A computer system, comprising:

a processor; memory; and a program module, wherein the program module is stored in the memory and configurable to be executed by the processor to perform calculations, the program module including:

instructions for accessing, at a memory location in the memory, organization data associated with individuals; instructions for determining a set of calculations to perform based on changes in the organization data relative to a previous instance of the organization data, wherein the determining uses the processor that is coupled to the memory location and programmed to perform the calculations; and wherein a given calculation involves organization data for a subset of the individuals, and subsets of the individuals used in different calculations at least partially overlap; instructions for performing a subset of the set of calculations based on organization data for a given individual to calculate a group of partial results;

instructions for repeating the performing for other subsets of the set of calculations based on organization data for other individuals to calculate other groups of partial results; and

instructions for combining the group of partial results and the other groups of partial results to obtain results for the set of calculations.

76. The computer system of clause 75, wherein the program module includes, prior to the instructions for determining the set of calculations, instructions for regularizing the organization data to correct anomalies relative to a predefined format.

77. The computer system of clause 75, wherein at least a portion of the set of calculations is performed in parallel.

78. The computer system of clause 75, wherein at least a portion of the set of calculations is performed sequentially.

79. The computer system of clause 75, wherein performing the subset of the set of calculations based on organization data for the given individual involves only accessing one time the organization data for the given individual at the memory location.

80. The computer system of clause 75, wherein the set of calculations are performed according to one of: after a predefined time interval since a previous instance of the set of calculations; as the organization data is received; and after an occurrence of a trigger event.

While preferred embodiments of the present disclosure have been shown and described herein, it will be obvious to those skilled in the art that such embodiments are provided by way of example only. It is not intended that the disclosure be limited by the specific examples provided within the specification. While the disclosure has been described with reference to the aforementioned specification, the descriptions and illustrations of the embodiments herein are not meant to be construed in a limiting sense. Numerous variations, changes, and substitutions will now occur to those skilled in the art without departing from the disclosure.

Furthermore, it shall be understood that all aspects of the disclosure are not limited to the specific depictions, configurations or relative proportions set forth herein which depend upon a variety of conditions and variables. It should be understood that various alternatives to the embodiments of the disclosure described herein may be employed in practicing the disclosure. It is therefore contemplated that the disclosure shall also cover any such alternatives, modifications, variations or equivalents. It is intended that the following claims define the scope of the disclosure and that methods and structures within the scope of these claims and their equivalents be covered thereby.

**Claims**

1. A computer-implemented method for analyzing employee value and retention risk and providing a retention suggestion and an associated cost-benefit analysis for at least one employee, the method comprising:

accessing, at a memory location, organization data for an organization;
using a computer processor that is coupled to the memory location and programmed to analyze the employee value and the retention risk, calculating a performance metric for the at least one employee based on the organization data;
using the organization data, determining the retention risk for the at least one employee;
providing the calculated performance metric and the determined retention risk; and
providing the retention suggestion and the associated cost-benefit analysis for the employee, wherein the cost-benefit analysis includes an expense associated with the retention suggestion and an estimated incremental retention time in response to the retention suggestion.

2. The method of claim 1, wherein accessing the organization data comprises:

accessing retention data for employees, wherein the retention data includes, as a function of time, retention probabilities that the employees remain in functions in an organization and a set of potential predictors for the retention probabilities,
generating Kaplan-Meier estimator curves based on the retention data and the set of potential predictors, and
analyzing the employee value and retention risk by identifying the predictors for retention, performing clustering analysis on the Kaplan-Meier estimator curves to determine natural groupings of the Kaplan-Meier estimator curves for the set of potential predictors, and identifying the predictors for retention of the employees based on the determined natural groupings.

3. The method of claim 2, wherein the clustering analysis involves one of: expectation maximization clustering and density clustering.

4. The method of any one of claims 2 to 3, wherein the identified predictors are associated with at least natural groupings having a centroid separation exceeding a threshold value.

5. The method of any one of claims 2 to 4, further comprising determining remedial action to increase the retention probabilities based on the identified predictors for retention.

6. The method of any of the preceding claims, wherein accessing the organization data further comprises accessing information specifying an assessment technique, wherein the organization data includes time samples of a performance metric for employees in the organization and features that are assessed using the assessment technique, and
wherein calculating the performance metric for the at least one employee based on the organization data further comprises modifying the assessment technique, generating a predictive model that predicts the performance metric based on a subset of the features, and modifying the assessment technique based on the predictive model to assess the subset of the features.

7. The method of claim 6, wherein the predictive model is generated by a panel method that accounts for correlations in the time samples, and wherein the predictive model includes a time-variant component based on averages of the performance metric and the subset of the features and a time-invariant component based on deviations from the averages of the performance metric and the subset of the features, and
wherein weights of the time-variant component and the time-invariant component in the predictive model are inversely related to variances of the time-variant component and the time-invariant component.

8. The method of claim 6 or claim 7, wherein:

the performance metric includes at least one of: customer satisfaction, average time to handle a customer, and adherence to a schedule;
the features include at least one of: abilities of the employees, characteristics of one or more positions, an environment of the organization that includes the one or more positions, experience of the employees, training of the employees, and relationships among the employees and with supervisors; and
the modifying is based on at least one of:

(i) drop-off of employees during the assessment technique as a function of a length of the assessment technique; and
(ii) marginal predictive power of the factors in the subset of the factors.

9. The method of claim 1, wherein the computer processor determines a set of calculations to perform based on changes in the organization data relative to a previous instance of the organization data, and wherein a given calculation involves organization data for a subset of the employees, and subsets of the employees used in different calculations at least partially overlap, and
wherein the performing calculations comprises performing a subset of the set of calculations based on organization data for a given employee to calculate a group of partial results, repeating the performing for other subsets of the set of calculations based on organization data for other employees to calculate other groups of partial results, and combining the group of partial results and the other groups of partial results to obtain results for the set of calculations.

10. The method of claim 9, wherein the computer processor implements one or more of:

regularize the organization data to correct anomalies relative to a predefined format prior to determining the set of calculations;
receive the organization data and store the organization data at the memory location prior to accessing the organization data;
perform at least a portion of the subsets of the set of calculations in parallel;
perform at least a portion of the subsets of the set of calculations sequentially;
perform the subset of the set of calculations based on organization data for the given employee by accessing the organization data for the given employee at the memory location; and
perform the set of calculations according to one of: after a predefined time interval since a previous instance of the set of calculations; as the organization data is received; and after an occurrence of a trigger event.

11. The method of any one of the preceding claims, wherein assessed employee value and employee retention risks are displayed on a graphical user interface to illustrate retention suggestions, optionally, displayed in a manner that permits a user to interact with the retention suggestions.

12. The method of any one of the preceding claims, wherein:

the organization data includes at least one of: tenure of the employee at the organization, compensation of the employee, satisfaction scores associated with the employee, skills of the employee, a supervisor of the employee, a colleague of the employee, interaction among employees of the organization, and operations information of the organization;
the performance metric includes at least one of: revenue associated with the employee, productivity of the employee, overtime worked by the employee, adherence of the employee to a schedule, attendance of the employee, a number of employees that interact with the employee, activity of the employee, and satisfaction scores associated with the employee; and
at least one of calculating the performance metric and determining the retention risk involves variance decomposition to select factors in the organization data, determine the impact of the factors, and to cluster the factors in regression models.

13. The method of any one of the preceding claims, further comprising:

accessing, at another memory location, external data for at least one other organization; and
the determining of the retention risk is based on the external data, wherein the external data includes one of: an unemployment rate in a region that includes the organization, hiring trends in the region, retention of employees by competitors of the organization, proximity of the competitors of the organization, compensation offered by the competitors, and activity of the employee on a social network.

14. A computer program product for use with a computer system, the computer program product comprising instructions that upon execution by one or more computer processors of the computer system implement a method as in any of the preceding claims.

15. A computer system, comprising:

one or more computer processors; and
memory coupled to the one or more computer processors, wherein the memory includes a computer program product with instructions that upon execution by the one or more computer processors implement a method as in any one of claims 1 to 13.

100

```
        ┌─────────────┐
        │    START    │
        └──────┬──────┘
               ▼
   ┌───────────────────────────┐
   │ ACCESS ORGANIZATION DATA  │
   │        FOR AN             │
   │      ORGANIZATION         │
   │          110              │
   └───────────┬───────────────┘
               ▼
   ┌───────────────────────────┐
   │ ACCESS EXTERNAL DATA FOR  │
   │   AT LEAST ONE OTHER       │
   │     ORGANIZATION           │
   │      (OPTIONAL)            │
   │          112              │
   └───────────┬───────────────┘
               ▼
   ┌───────────────────────────┐
   │ CALCULATE A PERFORMANCE   │
   │ METRIC FOR AN EMPLOYEE     │
   │ BASED AT LEAST ON THE      │
   │    ORGANIZATION DATA       │
   │          114              │
   └───────────┬───────────────┘
               ▼
   ┌───────────────────────────┐
   │ DETERMINE RETENTION RISK  │
   │ FOR THE EMPLOYEE BASED     │
   │ AT LEAST ON THE            │
   │   ORGANIZATION DATA        │
   │          116              │
   └───────────┬───────────────┘
               ▼
   ┌───────────────────────────┐
   │   PROVIDE THE CALCULATED  │
   │  PERFORMANCE METRIC AND    │
   │  THE DETERMINED            │
   │   RETENTION RISK           │
   │          118              │
   └───────────┬───────────────┘
               ▼
   ┌───────────────────────────┐
   │ PROVIDE A RETENTION       │
   │ SUGGESTION AND AN          │
   │ ASSOCIATED COST-BENEFIT    │
   │    ANALYSIS                │
   │          120              │
   └───────────┬───────────────┘
               ▼
        ┌─────────────┐
        │     END     │
        └─────────────┘
```

**FIG. 1**

~ 100

**ELECTRONIC DEVICE**
210

**COMPUTER**
212

PROVIDE INFORMATION
214

RECEIVE THE INFORMATION
216

CALCULATE A PERFORMANCE
METRIC
218

DETERMINE A RETENTION RISK
220

RECEIVE THE CALCULATED
PERFORMANCE METRIC AND THE
DETERMINED RETENTION RISK
224

PROVIDE THE CALCULATED
PERFORMANCE METRIC AND THE
DETERMINED RETENTION RISK
222

PROVIDE A REQUEST
226

RECEIVE THE REQUEST
228

RECEIVE THE RETENTION
SUGGESTION AND THE
ASSOCIATED COST-BENEFIT
ANALYSIS
232

PROVIDE A RETENTION
SUGGESTION AND AN ASSOCIATED
COST-BENEFIT ANALYSIS
230

**FIG. 2**

USER INTERFACE
300

GRAPH

EMPLOYEE VALUE
310

RETENTION RISK
312

SLIDER
314

HISTORY

RETENTION

**FIG. 3**

**FIG. 4**

FIG. 5

USER INTERFACE
600

GRAPH

RET. SUGGESTION
610-1

COST-BENEFIT ANAL.
612-1

RET. SUGGESTION
610-2

COST-BENEFIT ANAL.
612-2

SLIDER
314

HISTORY

RETENTION

FIG. 6

SYSTEM
700

ELECTRONIC
DEVICE
210

COMPUTER
212

NETWORK
710

COMPUTER(S)
712

FIG. 7

COMPUTER
SYSTEM
800

810

PROCESSOR(S)

SIGNAL
LINE(S)
822

MEMORY 824

| | |
|---|---|
| OPERATING SYSTEM | 826 |
| COMMUNICATION MODULE | 828 |
| ANALYSIS MODULE | 830 |
| EMPLOYEE-MANAGEMENT MODULE | 832 |
| ENCRYPTION MODULE | 834 |
| ORGANIZATION DATA | 836 |
| ORGANIZATION | 838 |
| EXTERNAL DATA (OPTIONAL) | 840 |
| EMPLOYEES | 842 |
| PERFORMANCE METRIC(S) | 844 |
| RETENTION RISK(S) | 846 |
| REGRESSION MODEL(S) | 848 |
| REQUEST (OPTIONAL) | 850 |
| RETENTION SUGGESTION(S) | 852 |
| COST-BENEFIT ANALYSIS | 854 |

814

USER INTERFACE

DISPLAY — 816

818 — KEYBOARD

820 — POINTER

812

COMMUNICATION
INTERFACE

**FIG. 8**

EP 2 889 822 A1

DATA
STRUCTURE
900

| ENTRY 910-1 | | TIMESTAMP 912 | ORGANIZATION DATA 836 | EXTERNAL DATA (OPTIONAL) 840 | EMPLOYEES 842 |
|---|---|---|---|---|---|
| ENTRY 910-2 | | SUBSET 914 | PERFORMANCE METRIC(S) 846 | RETENTION RISK(S) 848 | REMEDIAL ACTION(S) 916 |

•••

⋮

FIG. 9

1000

START

ACCESS RETENTION DATA FOR
INDIVIDUALS
1010

GENERATE KAPLAN-MEIER ESTIMATOR
CURVES BASED ON THE RETENTION DATA
AND A SET OF POTENTIAL PREDICTORS
1012

PERFORM CLUSTERING ANALYSIS ON THE
KAPLAN-MEIER ESTIMATOR CURVES TO
DETERMINE NATURAL GROUPINGS
1014

IDENTIFY PREDICTORS FOR RETENTION
FOR THE INDIVIDUALS BASED ON THE
DETERMINED NATURAL GROUPINGS
1016

DETERMINE REMEDIAL ACTION TO
INCREASE RETENTION PROBABILITIES
(OPTIONAL)
1018

END

FIG. 10

~ 1000

ELECTRONIC DEVICE
1110

COMPUTER
1112

PROVIDE INFORMATION
1114

RECEIVE THE INFORMATION
1116

GENERATE KAPLAN-MEIER
ESTIMATOR CURVES
1118

PERFORM CLUSTERING ANALYSIS
1120

IDENTIFY PREDICTORS FOR
RETENTION
1122

RECEIVE THE INFORMATION
SPECIFYING THE NATURAL
GROUPINGS AND THE PREDICTORS
1126

PROVIDE INFORMATION
SPECIFYING NATURAL GROUPINGS
AND THE PREDICTORS
1124

PROVIDE A REQUEST
1128

RECEIVE THE REQUEST
1130

DETERMINE ONE OR MORE
REMEDIAL ACTIONS
(OPTIONAL)
1132

RECEIVE THE INFORMATION
SPECIFYING THE ONE OR MORE
REMEDIAL ACTIONS
1136

PROVIDE INFORMATION
SPECIFYING THE ONE OR MORE
REMEDIAL ACTIONS
1134

FIG. 11

USER INTERFACE
1200

CUMM. ATTRITION GROUP A WITH SUPERVISOR A

CUMM. ATTRITION GROUP A WITH SUPERVISOR B

GRAPH

RETENTION PROBABILITY 1210

NATURAL GROUPINGS
1214

TIME
1212

RECOMMEND. ICON
1216

RECOMMENDATIONS
1218

REMEDIAL ACTION A    COST-BENEFIT ANAL. A

REMEDIAL ACTION B    COST-BENEFIT ANAL. B

FIG. 12

COMPUTER
SYSTEM
1300

PROCESSOR(S) — 1310

SIGNAL
LINE(S)
1322

MEMORY 1324

| | 1326 |
|---|---|
| OPERATING SYSTEM | |
| COMMUNICATION MODULE | 1328 |
| ANALYSIS MODULE | 1330 |
| EMPLOYEE-MANAGEMENT MODULE | 1332 |
| ENCRYPTION MODULE | 1334 |
| ORGANIZATION DATA | 1336 |
| ORGANIZATION | 1338 |
| EXTERNAL DATA (OPTIONAL) | 1340 |
| EMPLOYEES | 1342 |
| KAPLAN-MEIER ESTIMATOR CURVES | 1344 |
| NATURAL GROUPING(S) | 1346 |
| PREDICTOR(S) | 1348 |
| REMEDIAL ACTION(S) | 1350 |
| REQUEST (OPTIONAL) | 1352 |

1314

USER INTERFACE

DISPLAY — 1316

1318 — KEYBOARD

1320 — POINTER

1312 — COMMUNICATION INTERFACE

FIG. 13

DATA
STRUCTURE
1400

| ENTRY 1410-1 | TIMESTAMP 1412 | ORGANIZATION DATA 1336 | EXTERNAL DATA (OPTIONAL) 1340 | EMPLOYEES 1342 |

| ENTRY 1410-2 | KAPLAN-MEIER ESTIMATOR CURVES 1344 | NATURAL GROUPING(S) 1346 | ••• |

FIG. 14

1500

```
                    ┌─────────┐
                    │  START  │
                    └────┬────┘
                         ▼
      ┌────────────────────────────────────┐
      │   ACCESS ORGANIZATION DATA FOR AN   │
      │    ORGANIZATION AND INFORMATION     │
      │ SPECIFYING AN ASSESSMENT TECHNIQUE  │
      │                1510                 │
      └─────────────────┬──────────────────┘
                        ▼
      ┌────────────────────────────────────┐
      │   GENERATE A PREDICTIVE MODEL THAT  │
      │    PREDICTS A PERFORMANCE METRIC    │
      │     BASED ON A SUBSET OF FEATURES   │
      │                1512                 │
      └─────────────────┬──────────────────┘
                        ▼
      ┌────────────────────────────────────┐
      │  MODIFY THE ASSESSMENT TECHNIQUE    │
      │  BASED ON THE PREDICTIVE MODEL TO   │
      │ ASSESS THE SUBSET OF THE FEATURES   │
      │                1514                 │
      └─────────────────┬──────────────────┘
                        ▼
                  ┌─────────┐
                  │   END   │
                  └─────────┘
```

FIG. 15

1500

ELECTRONIC DEVICE
1610

COMPUTER
1612

PROVIDE INFORMATION
1614

RECEIVE THE INFORMATION
1616

GENERATE THE PREDICTIVE
MODEL
1618

MODIFY THE ASSESSMENT
TECHNIQUE
1620

RECEIVE THE INFORMATION
SPECIFYING THE MODIFIED
PREDICTIVE MODEL
1624

PROVIDE INFORMATION
SPECIFYING THE MODIFIED
PREDICTIVE MODEL
1622

ASSESS CANDIDATES FOR A JOB
TYPE
(OPTIONAL)
1626

FIG. 16

USER INTERFACE
1700

| | MARGINAL PREDICTIVE POWER 1714 | CUMMULATIVE PREDICTIVE POWER 1716 | GRAPH |
|---|---|---|---|
| FEATURE 1710-1 | 0.04073106 | 14.24% | |
| SUBSET 1712 — FEATURE 1710-2 | 0.02183809 | 20.11% | DROP-OFF 1718 / OPERATING POINT 1720 |
| FEATURE 1710-3 | 0.01826326 | 26.97% | LENGTH 1720 |

FIG. 17

COMPUTER
SYSTEM
1800

1810

| PROCESSOR(S) | SIGNAL LINE(S) 1822 |
|---|---|

MEMORY 1824

| OPERATING SYSTEM | 1826 |
|---|---|
| COMMUNICATION MODULE | 1828 |
| ANALYSIS MODULE | 1830 |
| HIRING MODULE | 1832 |
| ENCRYPTION MODULE | 1834 |
| ORGANIZATION DATA | 1836 |
| ORGANIZATION | 1838 |
| EXTERNAL DATA (OPTIONAL) | 1840 |
| INDIVIDUALS | 1842 |
| PREDICTIVE MODEL(S) | 1844 |
| SUBSET | 1846 |
| MARGINAL PREDICTIVE POWERS | 1848 |
| COMPLETION RATES | 1850 |
| ASSESSMENT TECHNIQUE | 1852 |
| JOB TYPES | 1854 |
| HIRING DECISIONS | 1856 |

1814

USER INTERFACE

| DISPLAY | 1816 |
|---|---|

1818 — KEYBOARD

1820 — POINTER

1812

COMMUNICATION
INTERFACE

FIG. 18

DATA
STRUCTURE
1900

| ENTRY 1910-1 | | TIMESTAMP 1912 | ORGANIZATION DATA 1836 | EXTERNAL DATA (OPTIONAL) 1840 | INDIVIDUALS 1842 |
| ENTRY 1910-2 | | PREDICTIVE MODEL(S) 1844 | SUBSET 1846 | ASSESSMENT TECHNIQUE 1852 | ••• |

FIG. 19

2000

START

RECEIVE AND STORE ORGANIZATION
DATA ASSOCIATED WITH INDIVIDUALS
(OPTIONAL)
2008

ACCESS THE ORGANIZATION DATA
2010

REGULARIZE THE ORGANIZATION DATA
(OPTIONAL)
2012

DETERMINE A SET OF CALCULATIONS TO
PERFORM
2014

REPEAT FOR OTHER
SUBSETS
2018

PERFORM A GIVEN SUBSET OF THE SET
OF CALCULATIONS
2016

COMBINE GROUPS OF PARTIAL RESULTS
TO OBTAIN RESULTS
2020

PERFORM ONE OR MORE ADDITIONAL
OPERATIONS
(OPTIONAL)
2022

END

FIG. 20

~ 2000

| ELECTRONIC DEVICE 2110 | COMPUTER 2112 | COMPUTER 2114 |
|---|---|---|

PROVIDE ORGANIZATION DATA
2116

→ RECEIVE THE ORGANIZATION DATA
2118

← SUPPLEMENT WITH EXT. DATA
(OPTIONAL)
2120

REGULARIZE THE ORGAN. DATA
(OPTIONAL)
2122

DETERMINE A SET OF
CALCULATIONS
2124

PERFORM SUBSETS OF THE SET
OF CALCULATIONS
2126

COMBINE GROUPS OF PARTIAL
RESULTS
2128

PERFORM ONE OR MORE
ADDITIONAL OPERATIONS
(OPT ONAL)
2130

PERFORM ONE OR MORE
ADDITIONAL OPERATIONS
(OPTIONAL)
2130

FIG. 21

FRAMEWORK
2200

ADAPTIVE
VISUALIZATION
DATA-
COMPUTATION
ENGINE
2220

DATA

DATA-INFLOW
ENGINE
2210

DATA-CLEANING
ANOMALY-
DETECTION ENGINE
2214

DATA
VECTORIZATION
2218

STORAGE AND COMPUTATION
ENGINE
2212

MACHINE-
LEARNING
ENGINES
2216

FIG. 22

COMPUTER
SYSTEM
2300

CLUSTER

PROCESSOR(S)

SIGNAL
LINE(S)
2322

— 2310

2314

USER INTERFACE

DISPLAY

2318 — KEYBOARD

2320 — POINTER

— 2316

2312

COMMUNICATION
INTERFACE

MEMORY 2324

| | |
|---|---|
| OPERATING SYSTEM | 2326 |
| COMMUNICATION MODULE | 2328 |
| COMPUTATION MODULE | 2330 |
| REGULARIZATION MODULE | 2332 |
| VECTORIZATION MODULE | 2334 |
| MACHINE-LEARNING MODULE | 2336 |
| VISUALIZATION MODULE | 2338 |
| ENCRYPTION MODULE | 2340 |
| ORGANIZATION DATA | 2342 |
| ORGANIZATION(S) | 2344 |
| EXTERNAL DATA (OPTIONAL) | 2346 |
| SET OF CALCULATIONS | 2348 |
| EXISTING MACHINE-LEARNING MODELS | 2350 |
| NEW MACHINE-LEARNING MODELS | 2352 |
| SUBSETS | 2354 |
| GROUPS OF PARTIAL RESULTS | 2356 |
| RESULTS | 2358 |
| USER-VISUALIZATION INPUT | 2360 |
| INFORMATION | 2362 |

FIG. 23

DATA STRUCTURE 2400

| ENTRY 2410-1 | | TIMESTAMP 2412 | ORGANIZATION DATA 2342 | EXTERNAL DATA (OPTIONAL) 2346 | INDIVIDUALS 2414 | ••• |

| ENTRY 2410-2 |

FIG. 24

Europäisches
Patentamt

European
Patent Office

Office européen
des brevets

**EUROPEAN SEARCH REPORT**

Application Number

EP 15 15 0075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required<br><br>----- | | INV.<br>G06Q10/10 |
| | | | **TECHNICAL FIELDS SEARCHED (IPC)**<br><br>G06Q |

The present search report has been drawn up for all claims

| Place of search | Date of completion of the search | Examiner |
|---|---|---|
| The Hague | 8 May 2015 | Nicoli, Félix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61964272 A
- US 61967699 A
- US 61995398 A
- US 61995400 A